# FASCICULE DE BREVET EUROPEEN

(11) **EP 3 145 898 B1**
(45) Date de publication et mention de la délivrance du brevet: **09.02.2022**
(21) Numéro de dépôt: 15732793.3
(22) Date de dépôt: 22.05.2015
(51) Int. Cl.: C05F 17/00, B09B 3/00, B07B 13/04, B03B 9/06, B07B 1/18, B07B 1/24, B07B 1/46, B07B 1/16, C05F 17/986, B07B 13/16, C05F 9/00, C05F 17/50, C05F 17/964, C05F 17/10

(54) **PROCÉDÉ DE TRAITEMENT D'UN MÉLANGE DE DÉCHETS INCLUANT UNE SÉPARATION ET UN COMPOSTAGE DUDIT MÉLANGE**
VERFAHREN ZUR BEHANDLUNG EINES ABFALLGEMISCHES, EINSCHLIESSLICH TRENNUNG UND KOMPOSTIERUNG DES BESAGTEN GEMISCHES
METHOD FOR TREATING A WASTE MIXTURE, INCLUDING SEPARATION AND COMPOSTING OF SAID MIXTURE

(30) Priorité: 23.05.2014 FR 1454708
(43) Date de publication de la demande: 29.03.2017
(73) Titulaire: Finance Developpement Environnement Charreyre - FIDEC, 43000 Polignac (FR)
(72) Inventeur: CHARREYRE, Fabien, Michel, Alain, Allegre 43270 (FR)
(74) Mandataire: Weber, Jean-François
(86) Numéro de dépôt international: PCT/FR2015/051370
(87) Numéro de publication internationale: WO 2015/177485

(56) Documents cités:
- WO-A1-2007/098610
- DE-A1- 3 916 866
- FR-A1- 2 988 625
- GB-A- 2 474 362
- US-A- 5 071 075

## Description

### DOMAINE TECHNIQUE

La présente invention concerne le domaine du traitement des déchets, en particulier le traitement des déchets ménagers et des déchets d'activités économiques pour leur recyclage, leur valorisation, ou leur retraitement.

L'invention concerne plus précisément un procédé de traitement d'un mélange de déchets, ces derniers étant de tailles, de formes et de consistances hétéroclites, une portion non négligeable de la masse du mélange de déchets étant formée par des déchets biodégradables, par exemple au moins 10 % de la masse, et une portion non négligeable de la masse du mélange étant formée par des déchets recyclables non biodégradables par exemple au moins 10 % de la masse.

Est également décrite une installation de traitement d'un mélange de déchets, ces derniers étant de tailles, de formes et de consistances hétéroclites, une portion non négligeable de la masse du mélange de déchets étant formée par des déchets biodégradables, par exemple au moins 10 % de la masse, et une portion non négligeable de la masse du mélange étant formée par des déchets recyclables non biodégradables, par exemple au moins 10 % de la masse.

### TECHNIQUE ANTERIEURE

Traditionnellement, le recyclage des déchets de façon industrielle nécessite un tri préalable de ces derniers, afin de pouvoir séparer lesdits déchets par types et permettre le recyclage de ces derniers dans des filières de recyclage séparées et spécialisées. Ces filières sont par exemple spécialisées dans le recyclage des métaux, du verre, des papiers et cartons, dans le compostage des déchets biodégradables, ou dans la fabrication de combustible solide de récupération. Les déchets complexes, et les autres déchets ne remplissant pas les critères leur permettant d'être traités dans les filières susmentionnées sont généralement incinérés ou enfouis, ce qui est particulièrement néfaste pour l'environnement, et de nature à polluer l'air et les sols.

Il est connu de demander aux ménages générant les déchets ménagers de trier, ou au moins pré-trier, par eux-mêmes leurs déchets ménagers. Il est dès lors nécessaire d'organiser une collecte sélective des déchets destinés au compostage, au recyclage, et des autres déchets apparemment irrécupérables, et donc destinés à l'incinération ou à l'enfouissement. Cependant, malgré la prise de conscience progressive des ménages à l'égard du tri et de ses conséquences bénéfiques pour l'environnement, un tel tri ou pré-tri ne saurait, la plupart du temps, être considéré comme fiable. En effet, les ménages ou les collectivités peuvent être dans l'impossibilité de trier les déchets convenablement, ce qui nécessite en particulier des infrastructures adaptées (plusieurs bacs de collecte de déchets, l'organisation d'une collecte sélective), parfois coûteuses, encombrantes, et génératrices de trafic supplémentaire. En outre, les ménages peuvent ne pas être en mesure d'effectuer le tri correctement, par exemple par méconnaissance de la nature précise des déchets et des possibilités éventuelles de valorisation de ces derniers, ou encore par absence de volonté d'effectuer le tri.

Une quantité non négligeable de déchets sont ainsi généralement enfouis ou incinérés, alors qu'ils pourraient faire l'objet d'un compostage, d'un recyclage, ou d'une transformation en combustible solide de récupération. Par exemple, en pratique, un maximum de 20 % de la masse des déchets ménagers est généralement recyclé. De plus, il est généralement nécessaire de trier à nouveau les déchets pré-triés par les ménages avant de pouvoir effectuer le recyclage, de nombreuses erreurs de tri ayant contribué à la pollution de ce mélange de déchets pré-triés par des déchets qui ne peuvent pas, à ce jour être traités autrement que par enfouissement ou incinération. Cette opération de tri supplémentaire représente un coût supplémentaire et une perte de temps non négligeable.

Le document WO-2007/098610A1 décrit un procédé et un système de compostage de déchets formés de façon prédominante par des déchets organiques issus d'un pré-tri (SSO).

Quant au document US-5,071,075A, il divulgue un procédé dans lequel est effectué un tri des déchets les plus fins, puis ensuite seulement un tri des éléments plus gros, en mettant le mélange de déchets d'abord en contact avec les petits orifices d'un trommel, puis avec des orifices plus grands du trommel.

### EXPOSE DE L'INVENTION

Les objets assignés à la présente invention visent en conséquence à remédier aux différents inconvénients énumérés précédemment et à proposer un nouveau procédé de traitement d'un mélange de déchets permettant de valoriser une portion très importante du mélange de déchets.

Un autre objet de l'invention vise à proposer un nouveau procédé de traitement d'un mélange de déchets permettant de valoriser sélectivement une ou plusieurs portions du mélange de déchets en dépit de l'hétérogénéité dudit mélange de déchets.

Un autre objet de l'invention vise à proposer un nouveau procédé de traitement d'un mélange de déchets polyvalents et universels, permettant de traiter tout type de déchets.

Un autre objet de l'invention vise à proposer un nouveau procédé de traitement d'un mélange de déchets permettant de générer de produits dont la valeur est très supérieure à la valeur initiale du mélange de déchets.

Un autre objet de l'invention vise à proposer un nouveau procédé de traitement d'un mélange de déchets étant peu coûteux et faciles à mettre en œuvre.

Un autre objet de l'invention vise à proposer un nouveau procédé de traitement d'un mélange de déchets permettant de réduire la quantité d'infrastructures de collecte et de traitement des déchets des collectivités.

Un autre objet de l'invention vise à proposer un nouveau procédé de traitement d'un mélange de déchets permettant de simplifier l'organisation de la collecte des déchets par les collectivités, les entreprises et les ménages.

Un autre objet de l'invention vise à proposer un nouveau procédé de traitement d'un mélange de déchets permettant un traitement du mélange de déchets de façon majoritairement, voire totalement automatisée.

Un autre objet de l'invention vise à proposer un nouveau procédé de traitement d'un mélange de déchets permettant d'effectuer un tri d'un mélange de déchets à une échelle industrielle.

Les objets assignés à l'invention sont atteints à l'aide d'un procédé de traitement d'un mélange de déchets selon la revendication 1.

Est également décrite une installation de traitement d'un mélange de déchets, ces derniers étant de tailles, de formes et de consistances hétéroclites, une portion non négligeable de la masse du mélange de déchets étant formée par des déchets biodégradables, par exemple au moins 10 % de la masse, et une portion non négligeable de la masse du mélange étant formée par des déchets recyclables non biodégradables, par exemple au moins 10 % de la masse, l'installation de traitement étant caractérisée en ce qu'elle comprend :
- une machine de tri, permettant de séparer le mélange de déchets en une première fraction de déchets dont la taille est inférieure à environ 180 mm, de préférence inférieure à 140 mm par l'intermédiaire d'une première série d'orifices de séparation, ladite première série d'orifices de séparation comprenant des orifices primaires et des orifices secondaires dont la taille est supérieure à la taille des orifices primaires de sorte que le mélange de déchets est d'abord mis en contact avec les orifices secondaires puis avec les orifices primaires, et en une deuxième fraction résiduelle de déchets,
- une installation de compostage permettant de faire subir un processus de compostage à la première fraction de déchets de manière à composter au moins en partie les déchets biodégradables qu'elle contient.

### DESCRIPTIF SOMMAIRE DES DESSINS

D'autres particularités et avantages de l'invention apparaîtront et ressortiront plus en détails à la lecture de la description faite ci-après, en référence aux dessins annexés, donnés uniquement à titre d'exemple illustratif et non limitatif, dans lesquels :
- La figure 1 représente, à l'aide d'un graphe orienté, un procédé de traitement d'un mélange de déchets selon l'invention, en détaillant l'ordre des étapes dudit procédé, en particulier des étapes E1 de séparation et E2 de compostage.
- La figure 2 illustre plus en détails, à l'aide d'un graphe orienté, le déroulement de l'étape E2 de compostage du procédé de la figure 1.
- La figure 3 représente plus en détails, à l'aide d'un graphe orienté, le déroulement une étape C de l'étape E2 de la figure 2.
- La figure 4 représente, selon une vue schématique en perspective, une coupe longitudinale d'une machine de tri pouvant être utilisée pour mettre en œuvre le procédé de traitement de la figure 1, en particulier l'étape E1, la figure 4 laissant en notamment apparaître l'intérieur d'une première et d'une deuxième section de trommel de ladite machine de tri, comportant respectivement une première paroi de séparation et une deuxième paroi de séparation.
- La figure 5 représente, selon une vue schématique de face, un détail de réalisation de la première paroi de séparation de la figure 4.
- La figure 6 illustre, selon une vue schématique de face, un détail de réalisation de la deuxième paroi de séparation de la figure 4.
- La figure 7 illustre, selon une de côté, une coupe longitudinale d'un moyen de séparation incluant un séparateur à tapis balistique pouvant être utilisé dans le procédé de traitement de la figure 1, en particulier au cours de l'étape E2.
- La figure 8 représente, selon une vue en perspective, le moyen de séparation de la figure 7.
- La figure 9 illustre, selon une vue en perspective, une coupe longitudinale d'une baie de séchage/compostage pouvant être utilisée dans le procédé de traitement de la figure 1, en particulier au cours de l'étape E2.

### MEILLEURE MANIERE DE REALISER L'INVENTION

L'invention concerne en tant que tel un procédé de traitement d'un mélange de déchets 2, visant à raffiner, valoriser et/ou recycler tout ou partie des déchets de ce dernier, et en particulier des déchets biodégradables, des déchets recyclables, et des déchets combustible qu'il contient.

Le mélange de déchets 2 est préférentiellement formé par des déchets ménagers, mais peut aussi être formé par des déchets d'activités économiques ou industrielles, ou les deux, lesdits déchets n'ayant subi aucun tri, ni broyage préalables.

Ce mélange de déchets 2 est ainsi avantageusement formé de déchets générés par des ménages, lors de la consommation et de la vie quotidienne de ces derniers.

De préférence, le mélange de déchets 2 n'a subi aucun traitement et forme un mélange de déchets 2 brut. En particulier, n'a été effectué aucun broyage du mélange de déchets brut, ni aucun tri préalable visant à effectuer une ségrégation d'un type de déchet par rapport à un autre, et notamment à effectuer une séparation de déchets biodégradables et de déchets recyclables non biodégradables. De préférence, le mélange de déchets 2 a été collecté, par exemple à l'aide de camions poubelles, auprès des ménages et/ou des activités économiques sans que lesdits ménages et/ou lesdites activités économiques aient effectué un tri ou sélection préalable des déchets collectés. En particulier, la collecte du mélange de déchets 2 n'a pas été sélective. Ainsi, selon une variante particulièrement intéressante de l'invention, le procédé de l'invention est un procédé de traitement d'un mélange de déchets brut non broyés.

Bien entendu, sans sortir du cadre de l'invention, le mélange de déchets 2 pourra au contraire avoir été dépouillé d'une portion des déchets recyclables qu'il contient, par exemple par les ménages à l'occasion d'un pré-tri, ou avoir fait lui-même l'objet d'un pré-tri, par exemple par les ménages.

Les déchets du mélange de déchets 2 sont avantageusement collectés de façon brute et indifférenciée, mélangés dans des sacs, du genre sacs poubelle plastique fermés par les ménages. De manière avantageuse, préalablement à l'étape E1 (décrite ci-après), le procédé comprend une étape E7 d'ouverture de sacs 24, du genre sacs poubelles plastique, dans lesquels sacs 24 est contenu le mélange de déchets 2, afin de libérer ledit mélange de déchets 2 desdits sacs 24 pour effectuer l'étape E1. Cette étape d'ouverture des sacs est automatisée de sorte à n'impliquer aucun traitement manuel.

Le mélange de déchets 2 ainsi libéré des sacs 24 est préférentiellement regroupé pour former le mélange de déchets 2 mis en oeuvre dans le procédé de traitement. L'ouverture des sacs 24 de déchets peut être effectuée par exemple à l'aide d'un dispositif d'ouverture de sacs, pour permettre la libération des déchets hors desdits sacs 24, de préférence sans abîmer ou altérer lesdits déchets.

Notamment du fait de l'absence de tri préalable avant l'entrée du mélange de déchets 2 dans le procédé de traitement de l'invention, les déchets sont de tailles, de formes et de consistances hétéroclites, de préférence de nature et d'origine variées. Le mélange de déchets 2 ainsi considéré pourra notamment comprendre à la fois des déchets mous, durs, coupants, liquides, poudreux, solides, plats, creux, pleins, collants, glissants, gras, cassants, flexibles, compressibles, incompressibles, combustibles, incombustibles ou encore cumulant plusieurs de ces caractéristiques. Le mélange de déchets 2 contient en majorité des éléments usagés et indésirables, par exemple des déchets alimentaires, des journaux, des papiers, des cartons, du verre, du plastique, du métal, des textiles, des combustibles et incombustibles divers, des matériaux complexes, des déchets dangereux des ménages, des déchets inertes, des encombrants.

Selon l'invention, une portion non négligeable de la masse du mélange de déchets 2 est formée par des déchets biodégradables, par exemple au moins 10 % de la masse, et une portion non négligeable de la masse du mélange est formée par des déchets recyclables 26 non biodégradables, par exemple au moins 10 % de la masse.

De manière avantageuse, au moins 10 %, de préférence au moins 20 %, de la masse du mélange de déchets 2 est formée par des déchets biodégradables, et au moins 10 %, de préférence au moins 20 %, de la masse du mélange est formée par des déchets recyclables 26 non biodégradables.

Au sens de l'invention, on entend par « *déchet biodégradable* » un déchet qui, sous l'action d'un milieu naturel, comprenant par exemple des organismes vivants et/ou de l'air et/ou de l'eau, peut naturellement et spontanément se décomposer en éléments divers susceptibles de dommages au milieu naturel (forte demande en oxygène, émission de lixiviats) à défaut d'avoir été stabilisés par exemple par compostage. Les organismes vivants peuvent en particulier être formés par des micro-organismes comme des bactéries, des champignons ou des algues, qui sont de nature à dégrader les déchets biodégradables à l'aide de réactions biochimiques. On entend de préférence par « *déchets biodégradables* » des déchets qui peuvent être dégradés de cette manière à l'échelle temporelle d'une vie humaine, d'une décennie, ou plus préférentiellement d'une année ou de quelques mois, de façon préférée de quelques semaines. On entend de préférence par « *déchets* biodégradables » des déchets susceptibles d'entrer dans la fabrication et la formation de compost par compostage de ces derniers.

Les déchets « *non biodégradables* », au sens de l'invention, forment les autres déchets, qui ne subissent pas spontanément et naturellement une telle dégradation, ou qui la subissent de façon trop lente. Les déchets « *non biodégradables* », sont en particulier inadaptés pour entrer dans la formation de compost par compostage de ces derniers.

Un déchet « *recyclable* », au sens de l'invention, forme un déchet qui peut être facilement transformé par exemple chimiquement ou mécaniquement, pour former une matière recyclée semblable à une matière première, qui peut entrer par exemple dans la fabrication d'un objet. Le terme « *déchet recyclable* » exclut de préférence les déchets biodégradables, même si leur transformation en compost leur confère en pratique un caractère recyclable. Au sens de l'invention, les déchets recyclables pourront comprendre par exemple :
- des déchets non métalliques, en particulier des polymères, du verre, des papiers, du carton, des journaux, gravats, bois, textile, électronique, etc.
- des déchets métalliques, formés par tout type de métaux.

Au sens de l'invention, le terme « *déchets non recyclable* » fait référence à tout déchet n'entrant pas dans les catégories décrites ci-dessus des « *déchets recyclables* » et des *« déchets biodégradables* ». En particulier, les déchets non recyclables regroupent notamment des déchets présentant un pouvoir calorifique qui les rend susceptibles d'être transformés en combustibles solides de récupération, et d'autres déchets ultimes inutilisables (déchets complexes, etc.) destinés par exemple à l'enfouissement ou à l'incinération.

De manière avantageuse, le procédé est un procédé industriel dans lequel les étapes sont effectuées à la chaîne et en parallèle les unes des autres. Par exemple, alors que des déchets subissent une étape donnée, d'autres déchets subissent simultanément une autre étape.

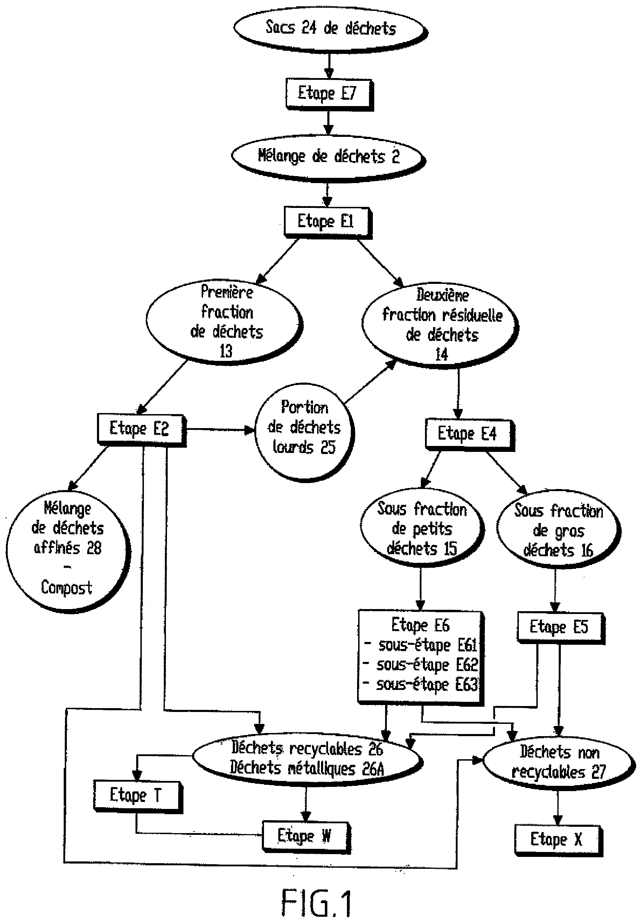

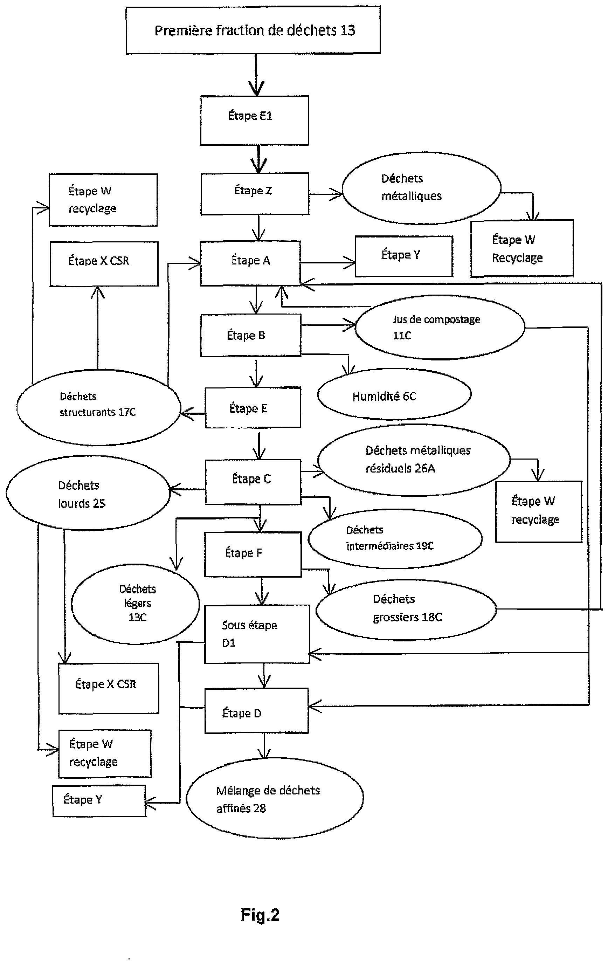

Tel qu'illustré aux figures 1 et 2, le procédé de traitement de l'invention comporte une étape E1 au cours de laquelle on sépare le mélange de déchets 2 en une première fraction de déchets 13 dont la taille est inférieure à environ 180 mm, de préférence inférieure à 140 mm, et une deuxième fraction résiduelle de déchets 14.

On entend par « *taille* », de manière générale, une dimension de l'espace du déchet selon sa longueur la plus grande, ou une dimension caractéristique. On entend par « *taille* » d'un déchet, une dimension géométrique caractéristique du déchet individuel, qui lui permet par exemple de passer au travers d'une maille de taille correspondante si la taille du déchet est inférieure à la taille de la maille, ou au contraire de ne pas passer si la taille dudit déchet est supérieure à la taille de ladite maille.

On entend par « *deuxième portion résiduelle de déchets* » la portion restante de déchets, qui n'a pas correspondu aux caractères de séparation de la première portion de déchets 13, en l'espèce le critère de taille. Rien n'interdit cependant que, au sens de l'invention, que des déchets qui auraient pu satisfaire au critère de séparation, en l'espèce de taille, de la première portion de déchets 13 puissent exister également dans la deuxième portion résiduelle de déchets 14. Par exemple, la deuxième portion résiduelle de déchets 14 peut contenir des déchets dont la taille est inférieure à 50 mm.

De cette manière, la première fraction de déchets 13 est avantageusement formée par des déchets présentant en moyenne une masse volumique plus élevée que les déchets de la deuxième fraction résiduelle de déchets 14, dans la mesure où, en pratique, les déchets de masse volumique la plus élevée sont préférentiellement de taille inférieure à 180 mm.

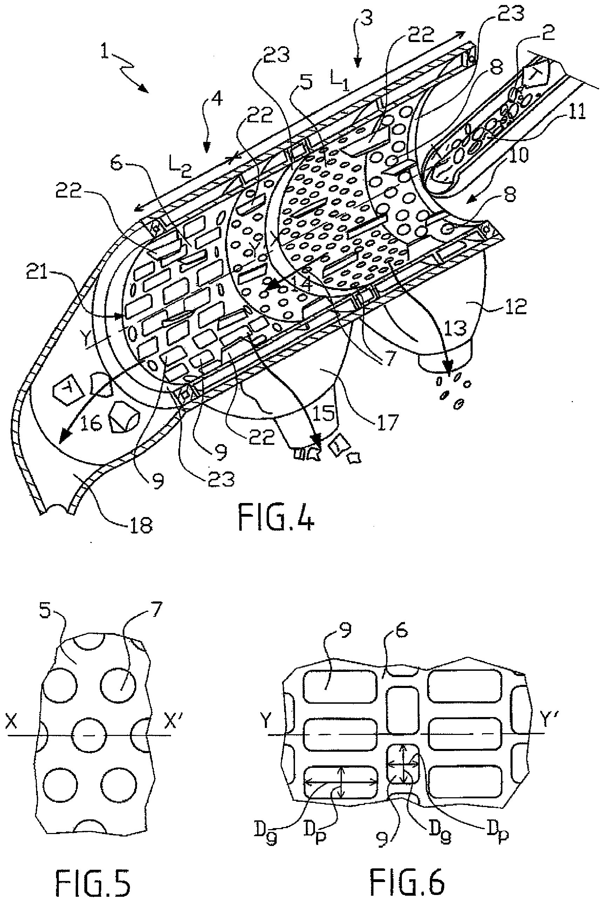

L'étape E1 est avantageusement effectuée à l'aide d'une machine de tri 1 décrite ci-après, dont un exemple de réalisation est représenté aux figures 4 à 6.

Selon l'invention, l'étape E1 du procédé inclut ainsi une séparation des déchets dont la taille est suffisamment petite, dont la masse volumique est la plus élevée, dont l'inertie dynamique est la plus importante, les déchets les plus collants, gras, salissants et humides du mélange de déchets 2 pour former la première fraction de déchets. Cette dernière est ainsi avantageusement formée au moins d'une majorité de déchets présentant de telles propriétés. De préférence, en l'espèce, la première fraction de déchets 13 concentre ainsi majoritairement des déchets organiques et/ou biodégradables, lesquels présentent la plupart du temps les propriétés précitées. Ainsi, de façon préférentielle, une portion non négligeable de la masse de la première fraction de déchets 13 est formée par des déchets biodégradables, par exemple au moins 50 % de la masse de la première fraction de déchets 13, voire au moins 60%, voire préférentiellement au moins 80 %. Également, une portion non négligeable de la masse de la deuxième fraction résiduelle de déchets 14 est avantageusement formée quant à elle par des déchets recyclables non biodégradables, qui pourront éventuellement être séparés et récupérés ultérieurement. De préférence, la deuxième fraction résiduelle de déchets 14, à l'issue de l'étape E1, contient une proportion négligeable de déchets biodégradables.

De préférence, une portion non négligeable de la masse de la deuxième fraction résiduelle de déchets 14 est formée par des déchets recyclables, par exemple au moins 50 % de la masse de la deuxième fraction résiduelle de déchets 14, voire au moins 60 %, voire préférentiellement au moins 80 %. Également, une portion non négligeable, mais la plus réduite possible, de la masse de la première fraction de déchets 13 est avantageusement formée quant à elle par des déchets biodégradables, qui pourront être séparés et récupérés ultérieurement de façon simplifiée. De préférence, moins de 40 % de la masse de la deuxième fraction résiduelle de déchets 14 est formée à ce stade de déchets biodégradables, de préférence moins de 25 %, voire moins de 10 %.

A l'issue de cette première séparation ainsi effectuée lors de l'étape E1, la première fraction de déchets 13 et la deuxième fraction résiduelle de déchets 14 pourront être traitées plus facilement dans les étapes suivantes du procédé, notamment dans la mesure où les déchets de la deuxième fraction résiduelle de déchets 14 sont, à ce stade, nettoyés de la plupart des déchets organiques et/ou biodégradables, collants, salissants et nauséabonds.

De préférence, les déchets de la première fraction de déchets 13 ont une taille inférieure à environ 110 mm, et sont séparés à l'aide d'une machine de tri 1 incluant par exemple un trommel rotatif, tel que décrit ci-après.

De manière avantageuse, le procédé comporte, à l'issue de l'étape E1 ou simultanément à cette dernière, une étape E4 de séparation de la deuxième fraction résiduelle de déchets 14 en une sous-fraction de gros déchets et une sous-fraction de petits déchets 15, la sous-fraction de gros déchets étant formée par des déchets dont la taille est supérieure à la sous-fraction de petits déchets 15. La sous-fraction de gros déchets est préférentiellement formée par des déchets dont la taille est supérieure à environ 330 mm, la sous-fraction de petits déchets 15 étant formée par des déchets dont la taille est inférieure à environ 330 mm. L'étape E4 pourra être effectuée par exemple à l'aide d'une machine de tri 1 décrite ci-après, à trommel rotatif.

Les fractions et sous-fractions de déchets 13, 15, 18 récupérées de façon séparée peuvent ainsi être traitées de façon indépendantes, en dépit de la très grande hétérogénéité du mélange de déchets 2 initial.

De manière avantageuse :
- la première fraction de déchets 13 représente entre 35 et 60 % de la masse du mélange de déchets 2 initial, de préférence environ 42 %,
- la sous-fraction de petits déchets 15 représente entre 20 et 40 % de la masse du mélange de déchets 2 initial, de préférence environ 28 %,
- la sous-fraction de gros déchets 16 représente entre 20 et 40 % de la masse du mélange de déchets 2 initial, de préférence environ 30 %.

Le procédé de traitement comporte préférentiellement une étape E5 de tri manuel de la sous-fraction de gros déchets 16, permettant de séparer d'une part les déchets recyclables 26 qu'elle contient, et d'autre part les déchets non recyclables 27 qu'elle contient. Le tri manuel est avantageusement rendu possible à ce stade, dans la mesure où les déchets sont de taille suffisamment conséquente, dépourvus de déchets de petite taille et de la plupart des fines. De plus, les déchets sont avantageusement dépourvus de la plupart de la matière collante et nauséabonde formée par la matière biodégradable, ce qui rend possible le tri manuel. Le tri manuel permet notamment de séparer de la sous-fraction de gros déchets 16 des déchets métalliques 26A, des déchets plastiques, des déchets électroniques de taille importante, des emballages en carton, etc.

Les déchets reconnus comme étant des déchets recyclables au cours du tri manuel seront avantageusement envoyés vers une étape W de recyclage, tel que décrite ci-après. Les déchets résiduels qui ne sont pas séparés pour recyclage seront avantageusement envoyés vers une étape X de fabrication de combustible solide de récupération, qu'ils soient effectivement recyclables ou non recyclables.

De préférence, le procédé de traitement comporte une étape E6 de tri automatisé de la sous-fraction de petits déchets 15, permettant de séparer d'une part les déchets recyclables 26 qu'elle contient, et d'autre part les déchets non recyclables 27 qu'elle contient. La sous-fraction de petits déchets 15 est de préférence adaptée à un tri automatique, les petits déchets 15 étant plus légers pour être par exemple manipulés par des appareils de tri.

L'étape E6 comporte de préférence une première sous-étape E61 de séparation de déchets métalliques 26A contenus dans la sous-fraction de petits déchets 15, par exemple à l'aide d'un séparateur électromagnétique et/ou d'un séparateur à courant de Foucault, de manière à séparer au moins la majorité des déchets métalliques 26A contenus dans ladite sous-fraction de petits déchets 15, les déchets métalliques 26A formant au moins en majorité des déchets recyclables 26. Les déchets métalliques 26A peuvent ainsi avantageusement être extraits de la sous-fraction de petits déchets 15, dans la mesure où ladite sous-fraction de petits déchets 15 est préférentiellement sensiblement dénuée de déchets biodégradables collants.

De préférence, l'étape E6 comporte une deuxième sous-étape E62, de séparation de la sous-fraction de petits déchets 15 en un flux de déchets sensiblement plats et un flux de déchets sensiblement volumiques. De cette manière, les deux flux de déchets pourront être dirigés vers des machines de tri adaptées à la morphologie des déchets qu'ils contiennent.

On entend par « *déchets sensiblement plats* », les déchets s'étendant majoritairement de façon surfacique, comme par exemple des journaux, des papiers, des plaques de matière plastique diverses. Le terme « *déchets sensiblement plats* » englobe avantageusement également des déchets volumiques suffisamment mous, ou de résistance mécanique suffisamment faible pour pouvoir être aplatis ou compactés facilement, par exemple certaines boîtes en carton.

On entend par « *déchets sensiblement volumiques* », des déchets qui s'étendent selon trois dimensions de l'espace, qui peuvent être creux, et qui résistent davantage que les déchets sensiblement plats à la compaction, qui sont plus rigides, ou plus solides. A titre d'exemple, les déchets sensiblement volumiques pourront comprendre des bouteilles en plastique ou en verre, des boîtes en plastique, des flacons et contenants divers.

Cette sous-étape E62 est préférentiellement effectuée à l'aide d'un séparateur à tapis balistique (non représenté). Le tapis balistique présente, de préférence, une inclinaison par rapport à l'horizontale de façon à former une pente, la bande de roulement étant conçue pour fournir un mouvement d'avance dans le sens de la montée de la pente. De manière avantageuse, les déchets sensiblement volumiques sont destinés à rouler et rebondir sur le tapis balistique par gravité de manière à dévaler la pente en direction d'un moyen de récupération bas du genre bac ou convoyeur, intégrant optionnellement un piège à verre. Les déchets sensiblement plats sont quant à eux préférentiellement entraînés vers le haut de la pente par le mouvement d'avance du tapis, vers un moyen de récupération haut, par exemple un autre convoyeur, de sorte que les déchets sensiblement plats et les déchets sensiblement volumiques sont séparés.

Les particules fines susceptibles d'être contenues dans la sous-fraction de petits déchets 15 adhèrent avantageusement au tapis balistique (ce dernier peut éventuellement être humidifié pour amplifier cet effet), et pourront avantageusement être raclées et récupérées à l'aide par exemple d'un racleur de bande en tungstène monté sur ledit tapis. La bande de roulement du tapis balistique peut avantageusement présenter des propriétés d'élasticité de nature à permettre le rebondissement des déchets sensiblement volumiques.

Le tapis balistique est préférentiellement combiné à un tapis accélérateur monté en amont, permettant d'accélérer la sous-fraction de petits déchets 15 de manière à ce que ces derniers atteignent le tapis balistique du séparateur à tapis balistique avec une vitesse prédéterminée.

De préférence, l'étape E6 comporte une troisième sous-étape E63 de tri robotisé d'une part du flux de déchets sensiblement plats et d'autre part du flux de déchets sensiblement volumiques, pour séparer de chacun desdits flux des déchets recyclables 26 et des déchets non-recyclables, la troisième sous-étape E63 étant effectuée à l'issue de la deuxième sous-étape E62. On choisira avantageusement des robots de tri distincts et adaptés respectivement au tri d'une part des déchets sensiblement plats et d'autre part des déchets sensiblement volumiques. Les robots de tri sont de préférence conçus pour séparer les déchets recyclables des déchets sensiblement plats et des déchets sensiblement volumiques par reconnaissance de ces derniers, en particulier par reconnaissance de signature optique, permettant en particulier au robot de tri de détecter le matériau du déchet à trier. Les déchets recyclables reconnus par les robots de tri seront avantageusement envoyés vers une étape W de recyclage. Les déchets non reconnus, incluant préférentiellement une faible proportion de déchets recyclables et une majorité de déchets non recyclables, seront avantageusement envoyés vers une étape X de fabrication de combustible solide de récupération.

Après tri par les robots de tri, avant l'étape W de recyclage, les déchets recyclables pourront avantageusement faire l'objet d'une étape T du procédé de traitement, au cours de laquelle on sépare des déchets métalliques non ferreux des déchets recyclables, par exemple à l'aide d'un séparateur à courant de Foucault. A ce stade du procédé, les déchets métalliques non ferreux sont par exemple formés par des déchets aluminium, ou encore des emballages souples alimentaires contenant une feuille d'aluminium.

De manière avantageuse, les flux distincts de déchets sensiblement volumiques et de déchets sensiblement plats sont convoyés à l'aide d'un jeu convoyeurs à bandes jusqu'aux robots de tri, le jeu de convoyeurs à bandes étant conçu pour étaler et répartir les déchets de manière à ce que sensiblement aucun déchet ne soit superposé à un autre lors de l'arrivée desdits déchets au niveau des robots de tri. L'efficacité du tri par les robots est ainsi avantageusement améliorée.

Les sous-étapes E61, E62 et E63 sont préférentiellement effectuées successivement dans cet ordre.

Le procédé de traitement de l'invention comporte également une étape E2, effectuée successivement à l'étape E1, au cours de laquelle on fait subir un processus de compostage à la première fraction de déchets 13 de manière à composter au moins en partie les déchets biodégradables qu'elle contient.

L'étape E2 vise ainsi préférentiellement à valoriser la première fraction de déchets 13, et en particulier à convertir les déchets biodégradables qu'elle contient en un mélange de déchets affinés 28, de manière à ce que, de préférence, le mélange de déchets affinés 28 forme du compost satisfaisant à la norme NF U 44-051. La norme NF U 44-051 de 2006, dénommée « *Amendements organiques* - *Dénominations, spécifications et marquage* », est une norme française.

Le processus de compostage de l'étape E2 comporte avantageusement les étapes successives suivantes :
- Étape A : on fait subir un premier cycle de compostage à la première fraction de déchets 13 de manière à composter au moins en partie les déchets biodégradables de ladite première fraction de déchets 13, et à obtenir un mélange de déchets 2 pré-compostés,
- Étape B : on fait subir un séchage au mélange de déchets 2 pré-compostés pour obtenir un mélange de déchets 2 séchés,
- Étape C : on sépare le mélange de déchets 2 séchés en au moins une portion de déchets lourds 25 et une portion de déchets légers 13C, la portion de déchets lourds 25 étant formée par des déchets de masse volumique plus élevée que les déchets de la portion de déchets légers 13C,
- Étape D : on fait subir un deuxième cycle de compostage à la portion de déchets légers 13C de manière à composter au moins en partie les déchets biodégradables qu'elle contient, et à obtenir un mélange de déchets affinés 28, en particulier du compost.

L'étape E2 inclut avantageusement le traitement de la première fraction de déchets 13 par deux cycles de compostage successifs séparés par une étape de séchage du de la première fraction de déchets 13 à l'issue du premier cycle de compostage pour faciliter la séparation et l'affinage plus facile de la première fraction de déchets 13. Ainsi, même si la première fraction de déchets 13 est particulièrement hétéroclite et présente de nombreux indésirables non susceptibles d'être traités par compostage, il est possible d'affiner ce dernier à l'aide de l'étape E2 pour obtenir des déchets affinés 28 dont la valeur est supérieure à celle du mélange de déchet initial.

Au sens de l'invention, on entend par « *compostage* » un processus biologique de conversion et de valorisation des déchets organiques, et notamment des déchets biodégradables contenus dans la première fraction de déchets 13, en favorisant et/ou en accélérant le processus naturel de biodégradation. Les cycles de compostages de l'étape E2 permettent préférentiellement de convertir au moins une portion de la première fraction de déchets 13 en un produit stabilisé, hygiénique, riche en composés humiques, de préférence en compost. On entend par « *compostage* » un compostage par exemple traditionnel ou industriel, mettant en œuvre notamment une action de micro-organismes pour dégrader et putréfier des déchets de la première fraction de déchets 13, ces micro-organismes étant naturellement présents dans la première fraction de déchets 13 et/ou ajoutés à la première fraction de déchets 13, et/ou amenés à se multiplier dans la première fraction de déchets 13. Le présent compostage met en œuvre en particulier une aération de la première fraction de déchets 13, et/ou une régulation de l'humidité de la première fraction de déchets 13 (par exemple par adjonction d'eau à la première fraction de déchets 13 et/ou par réintroduction dans le la première fraction de déchets 13 de jus de compostage 11 émis par cette dernière), et/ou une adjonction de micro-organismes à la première fraction de déchets 13 et/ou une adjonction de structurants 17C pour stimuler le processus de compostage, et/ou un apport de lumière, par exemple solaire.

Préférentiellement, l'étape A correspond à, ou comprend, une phase de dégradation des déchets, notamment biodégradables, alors que l'étape C correspond à, ou comprend, une phase de maturation des déchets, notamment biodégradables, pour obtenir le mélange de déchets affinés 28, ce dernier formant avantageusement du compost. La phase de dégradation se traduit avantageusement par une prolifération des micro-organismes dans la première fraction de déchets 13, alors que la phase de maturation se traduit préférentiellement par la diminution progressive de la quantité de micro-organismes ayant proliféré lors de la phase de dégradation, et la conservation de micro-organismes bénéfiques pour les sols. Les phases de dégradation et de maturations peuvent se chevaucher ou même être confondues.

Au cours de l'étape A, le premier cycle de compostage permet avantageusement le compostage de la portion biodégradable du la première fraction de déchets 13, alors que, bien entendu, les déchets non biodégradables restent sensiblement inaltérés, et servent en particulier de structurants 17C au processus de compostage, les déchets structurants 17C étant voués notamment à l'amélioration de la circulation de l'air au sein de la première fraction de déchets 13 en cours de compostage, pour permettre d'améliorer le compostage aérobie.

Le premier cycle de compostage de l'étape A, tout comme le deuxième cycle de compostage de l'étape D, s'effectue avantageusement de façon aérobie. Pour cela, on aère préférentiellement la première fraction de déchets 13 à composter, en particulier à l'aide d'une circulation d'un flux d'air traversant la première fraction de déchets 13 à composter, ou par remuage de la première fraction de déchets 13.

On apporte de préférence une source de lumière 5C à la première fraction de déchets 13 pour améliorer son compostage, par exemple une source de lumière 5C naturelle, et/ou une source de lumière 5C artificielle.

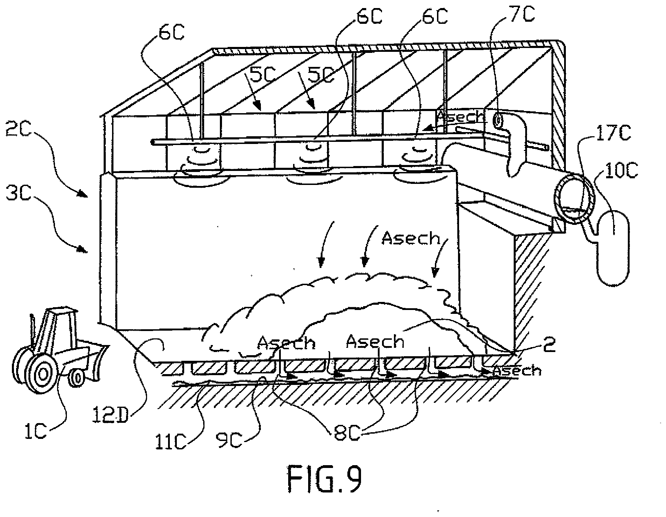

De manière avantageuse, lors de l'étape A et/ou de l'étape D et/ou de l'étape B, les déchets concernés étant disposés en tas que l'on retourne à plusieurs reprises, par exemple à l'aide d'une chargeuse 1C adaptée, afin de contribuer à aérer les déchets (tel qu'illustré par exemple à la figure 9). De préférence, au cours de l'étape A, la première fraction de déchets 13 est disposée dans au moins une première baie de compostage 3C, par exemple en tas. De préférence également, cours de l'étape D, les déchets de la portion de déchets légers 13C sont disposés dans au moins une deuxième baie de compostage 3C.

De façon préférentielle, au cours de l'étape A, et/ou au cours de l'étape D, on humidifie les déchets concernés à l'aide de sources d'humidité 6C, les sources d'humidité 6C étant par exemple formées par des dispositifs d'arrosage ou rampes d'arrosage dont sont équipées les premières et/ou deuxièmes baies de compostage, les tas étant destinés à être arrosés par les dispositifs d'arrosage, lesdits dispositifs d'arrosage étant par exemple disposés au dessus desdits tas.

On opère ainsi avantageusement une régulation de l'humidité du mélange de compostage lors des cycles de compostage.

L'étape E2 comporte avantageusement une étape Y au cours de laquelle on récupère des jus de compostage 11 suintant du mélange de déchets pour alimenter les sources d'humidité 6C.

De préférence l'étape Y peut également inclure un captage d'eau de pluie pour alimenter les sources d'humidité 6C, ce qui permet notamment de diminuer la consommation éventuelle d'eau courante, en particulier potable, de l'étape E2.

De préférence, avant l'étape A, et en particulier après l'étape E1, la première fraction de déchets 13 contient une proportion majoritaire de déchets humides et/ou collants, formés notamment par des déchets biodégradables, ou pour le moins adaptés au compostage. Leur caractère collant et/ou humide facilite avantageusement leur séparation de la deuxième fraction résiduelle de déchets par la machine de tri.

De façon préférentielle, préalablement à l'étape A, l'étape E2 comporte une étape Z au cours de laquelle on sépare des déchets métalliques 26A contenus dans la première fraction de déchets 13, par exemple à l'aide d'un séparateur électromagnétique et/ou d'un séparateur à courant de Foucault, de façon à séparer au moins la majorité desdits déchets métalliques 26A contenus dans le mélange de déchets 2. La première fraction de déchets 13 destinée au premier cycle de compostage est ainsi dénuée de la majeure partie des déchets métalliques 26A qu'elle contenait, et notamment ceux dont la taille et/ou la masse est importante, de sorte que le processus de compostage du premier cycle de compostage est favorisé et accéléré. Les déchets métalliques 26A ainsi séparés dans l'étape Z pourront avantageusement faire l'objet de l'étape W de recyclage.

De préférence, l'étape B, effectuée après l'étape A pour la première fraction de déchets 13 considérée, permet de retirer tout ou partie de l'humidité 6C du mélange de déchets 2 pré-compostés au cours de ladite étape A. Tel qu'illustré à la figure 9, pour ce faire, le mélange de déchets 2 pré-compostés par exemple disposé en tas dans au moins une, sinon plusieurs, baies de séchage, et soumis à un séchage. L'étape B comprend préférentiellement une sous-étape B1 de mise en circulation d'un flux d'air séchant A_{sech} à travers ledit mélange de déchets 2 pré-compostés pour sécher ce dernier, le flux d'air séchant A_{sech} traversant à cet effet de préférence le tas de déchets de part en part. L'air séchant A_{sech} est avantageusement formé par un courant d'air sec et chauffé à une température comprise entre 40°C et 90°C, de préférence 70°C, et qui est de nature à entraîner, lors de son passage dans le mélange de déchets 2 pré-compostés, l'humidité 6C contenue dans ce dernier. De façon préférentielle, la circulation du flux d'air séchant A_{sech} s'effectue verticalement, de préférence du haut vers le bas, sinon du bas vers le haut. Ainsi, on génère avantageusement une aspiration d'air 8C séchant sous le tas de déchets pré-compostés.

De préférence, pour mettre en oeuvre l'étape B, le mélange de déchets 2 pré-compostés est disposé en tas dans des baies de séchage, par exemple à même le sol de ces dernières. Pour contribuer au séchage dudit mélange de déchets 2 pré-compostés, l'étape E2 comprend de retourner le tas à une ou plusieurs reprises.

De façon préférentielle, et dans un but d'économie des ressources naturelles, on récupère au moins une portion de l'humidité 6C contenue dans le mélange de déchets 2 pré-compostés au cours de l'étape B, et on alimente les sources d'humidité 6C avec la portion de l'humidité 6C ainsi récupérée.

De préférence, l'humidité 6C du mélange de déchets 2 pré-compostés est ainsi retirée de ce dernier au cours de l'étape B pour être réintroduite ensuite dans la portion de déchets légers 13C de l'étape D, de sorte que cette humidité n'est pas gaspillée, et est réutilisée, au moins en partie.

En particulier, on récupère tout ou partie des jus de compostage 11C émanant du mélange de déchets 2 pré-compostés en cours de séchage, par exemple par drainage de ces derniers à l'aide d'un moyen de drainage 9C de la baie de séchage 2C. Ces jus de compostage 11C sont avantageusement stockés, et transportés pour être réintroduits ultérieurement dans la mise en œuvre de premiers et deuxièmes cycles de compostages. Les jus de compostage 11C comportant notamment de l'eau, des micro-organismes et d'autres éléments utiles au bon déroulement d'un compostage, leur réintroduction par l'intermédiaire des sources d'humidité 6C dans un mélange de déchets 2 à composter permet une amélioration du compostage de ce dernier tout en réduisant la nécessité d'apporter de l'extérieur l'eau, les micro-organismes et les autres éléments utiles au bon déroulement du compostage.

De façon avantageuse, on met l'air séchant A_{sech} en circulation au moins à l'aide d'un soufflage d'air 7C effectué au dessus du mélange de déchets 2 pré-compostés, de sorte que l'air séchant A_{sech} draine l'humidité 6C du mélange de déchets 2 pré-compostés, l'étape de récupération de la portion d'humidité étant effectuée au moins en partie par condensation de l'humidité 6C provenant du mélange de déchets 2 pré-compostés et drainée par le flux d'air séchant A_{sech}.

En l'espèce, chaque baie de séchage 2C comprend également, de préférence, des moyens de mise en circulation d'air séchant A_{sech} au travers du mélange de déchets 2 pré-compostés pour le sécher ce dernier, les moyens de mise en circulation incluant au moins :
- des moyens de soufflage d'air 7C au dessus du mélange de déchets 2 pré-compostés,
- des moyens d'aspiration d'air 8C séchant en dessous du mélange de déchets 2 pré-compostés.

De plus, chaque baie de séchage 2C comprend avantageusement un récupérateur 10C d'une portion de l'humidité 6C contenue dans le mélange de déchets 2 pré-compostés lors du séchage de ce dernier, le récupérateur 10C d'humidité permettant d'alimenter les sources d'humidité 6C avec l'humidité 6C récupérée lors du séchage desdits déchets pré-compostés.

De façon préférentielle, on traite le flux d'air séchant A_{sech} ayant circulé au travers du mélange de déchets 2 pré-compostés pour le décharger sensiblement de toute émission de compostage, notamment odorante, à l'aide par exemple d'un filtrage, ou d'un traitement biochimique. A cet effet, la ou les baie(s) de séchage comprend préférentiellement des moyens de traitement de l'air séchant A_{sech} ayant circulé au travers du mélange de déchets 2 pré-compostés pour le décharger sensiblement de toute émission de compostage, notamment odorante. De manière générale, les émissions d'air et de polluants éventuels liées à la mise en œuvre de l'étape E2 sont avantageusement traitées de cette manière, ce qui permet à l'étape E2 d'être sensiblement non polluante et de ne pas générer d'odeurs.

De manière avantageuse, à l'issue de l'étape B et préalablement à l'étape C, ladite étape E2 comporte une étape E au cours de laquelle on sépare du mélange de déchets 2 séchés une portion de déchets dont la taille est supérieure à environ 30 mm, dits déchets structurants 17C, qu'ils soient des déchets biodégradables ou non, compostés ou non, et on ajuste la concentration en déchets structurants 17C d'autre déchets subissant l'étape A en y adjoignant la portion de déchets structurants 17C ainsi séparée du mélange de déchets 2 séchés, de manière notamment à structurer et ensemencer le premier cycle de compostage. La séparation des déchets structurants 17C est avantageusement effectuée à l'aide d'un trommel rotatif dont la maille permet la ségrégation d'objets dont la taille est supérieure à environ 30mm, et d'objets dont la taille est inférieure à environ 30mm. On réutilise ainsi avantageusement les déchets structurants 17C du mélange de déchets 2 séchés pour améliorer un premier cycle de compostage en cours ou ultérieur d'autres déchets. De cette manière, il n'est pas ou peu nécessaire d'adjoindre, pour le premier cycle de compostage, des structurants 17C provenant d'une source extérieure. On réintroduit avantageusement une portion plus ou moins grande des déchets structurants 17C récupérés dans des déchets subissant l'étape A de manière à ajuster, en faisant l'appoint, la concentration en structurants 17C desdits déchets jusqu'à une valeur prédéterminée, préférentiellement propre à améliorer le premier cycle de compostage. Les déchets structurants 17C récupérés qui ne sont pas réintroduits pourront de préférence faire l'objet d'un tri, par exemple manuel ou à l'aide d'une machine du genre trommel rotatif, de manière à séparer des déchets recyclables, que l'on recycle, et des déchets non recyclables, auxquels on fait subir une étape X de fabrication de combustible solide de récupération (CSR), ou un autre type de retraitement du genre enfouissement ou incinération. En effet, il est possible, à ce stade de l'étape E2, d'envisager de faire entrer une portion du mélange de déchets 2 séchés dans l'étape X de fabrication de combustible solide de récupération, dans la mesure où les déchets sont séchés sont suffisamment secs, et en particulier d'une humidité intrinsèque inférieure à environ 10 %.

On sépare avantageusement tout ou partie des éléments indésirables à la formation du mélange de déchets affinés 28 final au cours l'étape C. Cette séparation est facilitée par le fait que, à ce stade de l'étape E2, tout ou partie des déchets biodégradables ont subi le premier cycle de compostage, de sorte à être compostés, au moins de manière partielle, et que ces mêmes déchets biodégradables sont secs, et donc en particulier non collants, disséminés sous forme de poudre ou de gravier de pré-compost qui adhère de façon moins importante aux déchets non biodégradables. Ces déchets biodégradables pré-compostés et secs, en outre, présentent avantageusement, pour la plus grande partie d'entre eux, une masse volumique peu élevée et distincte du reste des déchets du mélange de déchets 2 séchés. Ainsi, au cours de l'étape C, la portion de déchets légers 13C comprend une concentration majoritaire de déchets biodégradables susceptibles d'être transformés en compost. Il est ainsi plus aisé d'effectuer une sélection des déchets susceptibles de former le mélange de déchets affinés 28 parmi le mélange de déchets 2, qui était initialement relativement hétéroclite.

L'étape C et l'étape E sont préférentiellement réalisées à l'aide de moyens de séparation du mélange de déchets 2 séchés au moins en une portion de déchets lourds 25 et une portion de déchets légers 13C, la portion de déchets lourds 25 étant sensiblement formée par des déchets de masse volumique plus élevée que les déchets de la portion de déchets légers 13C. Les moyens de séparation incluent avantageusement également le trommel associé à l'étape E. Le trommel associé à l'étape E pourra optionnellement être équipé d'une brosse permettant de nettoyer la portion de déchets légers 13C par frottement, afin d'en séparer les déchets susmentionnés.

De préférence, la portion de déchets légers 13C séparés au cours de l'étape C présente une masse volumique inférieure à environ 0,7 kg/L, de préférence inférieure à environ 0,6 kg/L, le compost sec présentant généralement une masse volumique proche de 0,5 kg/L. Les matières plastiques présentant une masse volumique le plus souvent supérieure à 0,8 kg/L peuvent ainsi facilement être séparées de la portion de déchets légers 13C. On peut ainsi avantageusement séparer de la portion de déchets légers 13C les matières plastiques, dont les matières plastiques chlorées comme les polychlorures de vinyles (PVC), de sorte que le mélange de déchets affinés 28 en sera sensiblement exempt à l'issue de l'étape D, ou en sera pourvu dans des proportions négligeable. Par exemple, les graviers et autres pierres, les métaux, le verre, les fibres papetières dégradées ou en cours de dégradation peuvent également être séparés au cours de l'étape C, de sorte que le mélange de déchets affinés 28 en sera sensiblement exempt à l'issue de l'étape D, ou en sera pourvu dans des proportions négligeable.

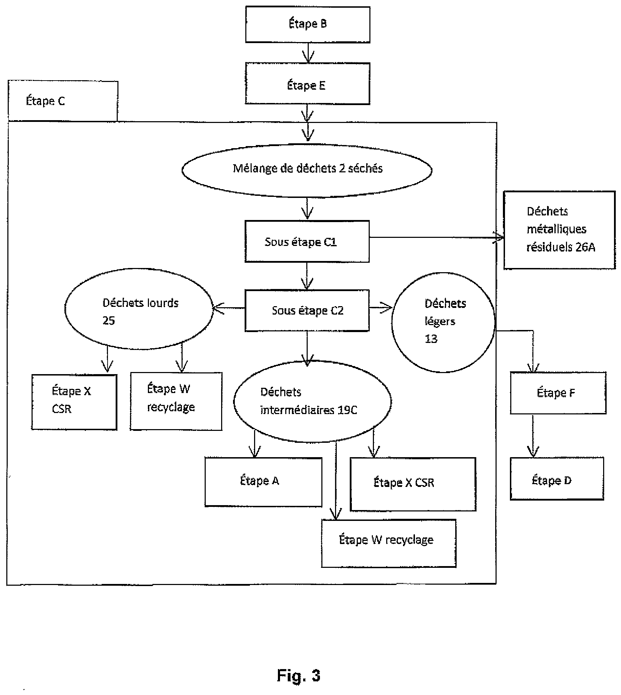

Tel qu'illustré à la figure 3, l'étape C comprend de préférence une première sous-étape C1 au cours de laquelle on sépare du mélange de déchets 2 séchés des déchets métalliques 26A résiduels qu'il contient, par exemple à l'aide d'un séparateur électromagnétique et/ou d'un séparateur à courant de Foucault, de manière à séparer au moins la majorité des déchets métalliques 26A résiduels contenus dans ledit mélange de déchets 2 séchés. On sépare ainsi avantageusement à nouveau tout élément métallique ferreux (à l'aide du séparateur magnétique) et non ferreux (à l'aide du séparateur à courant de Foucault) contenu dans le mélange de déchets 2 séchés, qui n'aurait en particulier pas été séparé au cours de l'étape Z. L'état « séché » des déchets facilite avantageusement une telle séparation. Cette première sous-étape C1 contribue préférentiellement à la formation d'un mélange de déchets affinés 28 de bonne qualité, et notamment d'un compost satisfaisant à la norme NF U 44-051. L'étape E2 comprend ainsi de préférence une étape W de recyclage des déchets métalliques 26A initialement contenus dans la première fraction de déchets 13. La sous-étape C1 est de préférence effectuée avant la séparation des déchets lourds et des déchets légers.

L'étape C comprend préférentiellement une deuxième sous-étape C2, au cours de laquelle on sépare le mélange de déchets 2 séchés, outre la portion de déchets lourds 25 et de déchets légers 13C, en une portion de déchets intermédiaires 19C dont la masse volumique est intermédiaire, c'est-à-dire comprise entre la masse volumique des déchets des première et deuxième portions de déchets, et que l'on adjoint ladite portion de déchets intermédiaires 19C dans des déchets subissant l'étape A. Les déchets intermédiaires 19C, dont la masse volumique est par exemple supérieure à environ 0,6 kg/L mais inférieure à environ 0,7 kg/L, sont préférentiellement renvoyés dans un premier cycle de compostage conforme à l'étape A. En effet, il est possible que les déchets intermédiaires 19C puissent être formés par des déchets biodégradables dont la dégradation du premier cycle de compostage serait incomplète, ou dont le séchage serait incomplet. Cette deuxième sous-étape C2 permet ainsi d'améliorer la séparation entre les déchets qui entreront dans la composition du mélange de déchets affinés 28, et les autres déchets.

La deuxième sous-étape C2 est préférentiellement effectuée après la sous-étape C1, et contribue à la séparation des déchets lourds et des déchets légers.

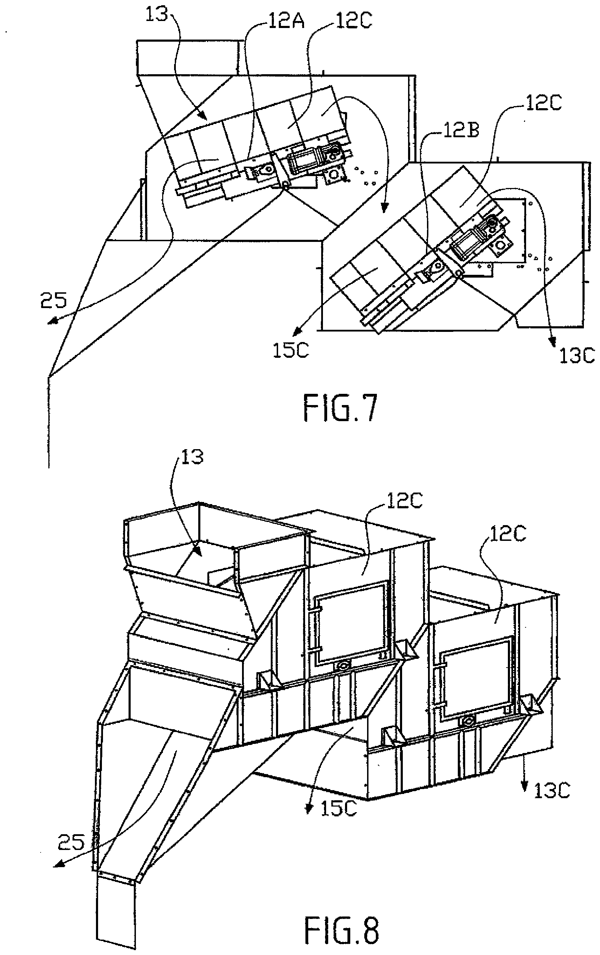

L'étape C, la première sous-étape C1 et la deuxième sous-étape C2 sont avantageusement effectuées au moins à l'aide des moyens de séparation susmentionnés, comprenant notamment un séparateur à tapis balistique 12C (tel qu'illustré par exemple aux figures 7 et 8) et un séparateur à table densimétrique associés. En l'espèce, l'étape E2 met préférentiellement en œuvre un premier tapis balistique 12A permettant de séparer en premier la portion de déchets lourds 25, le reste du mélange de déchets 2 séchés étant dirigé vers un deuxième tapis balistique 12B permettant de séparer une portion de déchets légers 13C et une portion de déchets indéterminés 15C. La portion de déchets indéterminée est avantageusement dirigée vers le séparateur densimétrique, qui permet de séparer la portion de déchets indéterminée plus finement, en particulier en séparant des déchets légers rejoignant la portion de déchets légers 13C, des déchets lourds rejoignant la portion de déchets lourds 25, et la portion de déchets intermédiaires 19C décrite ci-avant.

Tel que représenté aux figures 7 et 8, le premier et le deuxième tapis balistiques 12A, 12B sont de préférence inclus dans la même machine, tel qu'illustré aux figures, le premier tapis balistique 12A alimentant directement le deuxième tapis balistique 12B par gravité. Un tapis accélérateur peut avantageusement être placé en amont du premier tapis balistique 12A de manière à accélérer le mélange de déchets 2 séchés pour les projeter sur le premier tapis balistique 12B avec une certaine énergie cinétique propre à améliorer la séparation des déchets. Le premier tapis balistique 12A et le deuxième tapis balistique 12B présentent de préférence une inclinaison dans le sens longitudinal, laquelle inclinaison est réglable, par exemple entre 20° et 70° par rapport à l'horizontale, afin de permettre de régler la séparation des déchets. Pour améliorer la séparation, le premier et/ou le deuxième tapis balistique 12A,12B comporte de préférence une bande de roulement élastique permettant de faire rebondir et faire rouler certains types de déchets sur ladite bande de roulement (notamment les plus massifs d'entre eux), certains autres des déchets étant destinés au contraire à adhérer à la bande de roulement. La bande de roulement peut d'ailleurs avantageusement présenter des propriétés adhérentes ou collantes, notamment pour faire adhérer les déchets les plus fins. Le mélange de déchets 2 séchés comprend en particulier des fines, qui peuvent être avantageusement récupérées pour être introduites dans la portion de déchets légers 13C, par exemple par raclage des tapis balistiques 12C à l'aide d'un racleur au tungstène équipant lesdits tapis balistiques (non représenté).

A l'issue de l'étape C, en particulier de la sous-étape C2, et préalablement à l'étape D, l'étape E2 comporte préférentiellement une étape F au cours de laquelle on sépare de la portion de déchets légers 13C, une portion de déchets grossiers 18C dont la taille excède 12 mm, par exemple à l'aide d'un trommel rotatif dont la maille permet la ségrégation d'objets dont la taille est supérieure à environ 12 mm, et d'objets dont la taille est inférieure à environ 12 mm. Les déchets grossiers 18C forment, dans ce cas, des déchets légers dont la taille est trop importante pour pouvoir entrer dans la composition du mélange de déchets affinés 28, et en particulier pour former du compost répondant à la norme NF U 44-051. Tout ou partie de cette portion de déchets grossiers 18C est avantageusement concassée pour être réintroduite dans la portion de déchets légers 13C au cours de l'étape D. Alternativement, tout ou partie de cette portion de déchets grossiers 18C est préférentiellement réintroduite dans des déchets subissant l'étape A. En outre, tout ou partie de cette portion de déchets grossiers 18C, qui peut être formée de déchets non compostables, peut entrer dans l'étape X de fabrication de combustible solide de récupération, ou faire l'objet, si possible, de l'étape W de recyclage.

Enfin, l'étape D permet préférentiellement d'affiner la décomposition des déchets organiques contenus dans la première fraction de déchets 13 initiale. A ce stade de l'étape E2, le deuxième cycle de compostage est effectué sur la portion de déchets légers 13C, lesquels proviennent de la première fraction de déchets 13, qui a été dépourvu de la grande majorité, sinon de l'ensemble des déchets non conformes à la formation du mélange de déchets affinés 28 final. On obtient ainsi un mélange de déchets affinés 28 de bonne qualité, et susceptible de répondre à des normes particulières. Par ailleurs, à l'issue de l'étape E2, la majeure partie, sinon l'ensemble, des déchets biodégradables la première fraction de déchets 13 entrent dans la composition du mélange de déchets affinés 28 final.

L'étape D est préférentiellement effectuée en plaçant la portion de déchets légers 13C, par exemple en tas, dans au moins une deuxième baie de compostage 3C, par exemple similaire à la première baie de compostage 3C.

L'étape D comprend avantageusement au moins une sous-étape D1 de réhumidification des déchets légers, par exemple avec l'humidité 6C récupérée lors de l'étape B de séchage, afin de favoriser le compostage naturel, et en particulier la maturation du compost au cours du deuxième cycle de compostage pour former le mélange de déchets affinés 28. De préférence, l'étape D comprend également une aération des déchets légers, de façon par exemple similaire à l'étape A (à l'aide d'un flux d'air, ou de plusieurs retournements du tas de déchets légers) pour favoriser la formation de déchets affinés 28.

L'étape D peut également préférentiellement comprendre la réintroduction de micro-organismes dans lesdits déchets légers, provenant par exemple du premier cycle de compostage de l'étape A.

Il est ainsi possible de valoriser la première fraction de déchets 13 en un mélange de déchets affinés 28 final, formant par exemple un compost conforme à la norme NF U 44-051.

De manière avantageuse, et tel que représenté à la figure 1, le procédé de traitement comporte une étape W au cours de laquelle on effectue un recyclage de déchets recyclables 26 non biodégradables que l'on a préalablement séparés de la première fraction de déchets 13 au cours de l'étape E2 et de déchets recyclables 26 que l'on a préalablement séparés de la deuxième fraction résiduelle de déchets 14, par exemple au cours des étapes E4, E5 ou E6. Tel que décrit ci-avant, l'étape E2 permet préférentiellement, au cours de son déroulement, d'extraire et de séparer des déchets recyclables 26 de la première fraction de déchets 13, tout comme les étapes E4 à E6.

Tel que représenté à la figure 1, la portion de déchets lourds 25 est ajoutée à la deuxième fraction résiduelle de déchets 14 à l'issue de l'étape E1, pour subir notamment l'étape E4 et/ou les étapes E5 et/ou E6 décrites ci-avant, dans la mesure où ils comprennent avantageusement une proportion majoritaire de déchets recyclables non biodégradables en regarde de la proportion de déchets biodégradables.

Le procédé de traitement comporte avantageusement, en outre, une étape X au cours de laquelle on fait subir un processus de fabrication de combustible solide de récupération à des déchets, préférentiellement non recyclables, que l'on a séparés de la première fraction de déchets 13 au cours de l'étape E2 et que l'on a séparés de la deuxième fraction résiduelle de déchets 14, par exemple au cours de l'étape E6. Les déchets ainsi récupérés, de préférence non recyclables et non valorisables dans les autres filières (recyclage ou fabrication de compost), sont avantageusement sensiblement dépourvu d'éléments chlorés, de sorte qu'ils peuvent entrer dans la fabrication de combustible solide de récupération. En effet, la plupart des éléments chlorés, par exemple les déchets contenant du PVC, ont préférentiellement été séparés au préalable au cours d'étapes du procédé de traitement.

L'étape X comporte avantageusement une sous-étape de séparation des fines des déchets non recyclables, afin de ne convertir en combustible solide de récupération des déchets dénués de fines.

L'étape X comporte avantageusement une sous-étape de sélection de déchets présentant un pouvoir calorifique au dessus d'un seuil prédéterminé, afin de fabriquer du combustible solide de récupération dont le pouvoir calorifique est particulièrement élevé.

L'étape X comporte de préférence une sous-étape au cours de laquelle on ajoute des éléments à haut pouvoir calorifique aux déchets de l'étape X, lesdits éléments à haut pouvoir calorifique étant distincts des déchets du procédé de traitement, afin d'augmenter, ou de réguler le pouvoir calorifique du combustible solide de récupération.

L'étape X comporte avantageusement une sous-étape d'ajout de déchets industriels banals aux déchets de l'étape X.

De manière préférentielle, les fines récupérées à partir des déchets au cours des étapes précédemment décrites pourront soit entrer dans l'étape E2 pour la fabrication de compost, soit être détruites ou enfouies.

De manière générale, les déchets qui n'ont pas pu être recyclés, transformés en compost ou en combustible solide de récupération sont préférentiellement enfouis ou incinérés.

L'invention concerne également en tant que telle une installation de traitement d'un mélange de déchets 2, ces derniers étant de tailles, de formes et de consistances hétéroclites, une portion non négligeable de la masse du mélange de déchets 2 étant formée par des déchets biodégradables, par exemple au moins 10 % de la masse, et une portion non négligeable de la masse du mélange étant formée par des déchets recyclables 26 non biodégradables, par exemple au moins 10 % de la masse.

L'installation décrite ci-après permet préférentiellement de mettre en œuvre le procédé de traitement décrit ci-avant, et forme de préférence une usine de traitement et de tri des déchets.

L'installation de traitement de l'invention comprend une machine de tri 1 rotative, permettant de séparer le mélange de déchets 2 en une première fraction de déchets 13 et une deuxième fraction résiduelle de déchets 14, la première fraction de déchets 13 dont la taille est inférieure à environ 180 mm, de préférence inférieure à 140 mm.

La vocation de la machine de tri 1 est avantageusement d'organiser les déchets dudit mélange de déchets 2, en classant et en séparant les déchets qu'il contient par catégories en fonction de leur nature ou de caractéristiques propres. Les déchets ainsi triés par la machine de tri 1 pourront de cette façon avantageusement faire l'objet des traitements décrits ci-avant, qui ne pourraient être effectués lorsque lesdits déchets sont à l'état de mélange de déchets 2 initial.

Un exemple de réalisation non exhaustif et non limitatif d'une machine de tri 1 la figure 4.

La machine de tri 1 comprend avantageusement au moins une première section de trommel 3, pourvue d'une première paroi de séparation 5 s'étendant sur une première longueur L1 axiale et étant pourvue d'une première série d'orifices de séparation 7, 8 traversants permettant de séparer le mélange de déchets 2 en une première fraction de déchets 13 franchissant ladite première paroi de séparation 5 par l'intermédiaire de la première série d'orifices de séparation 7, 8 et en une deuxième fraction résiduelle de déchets 14, le mélange de déchets 2 étant destiné à circuler le long de ladite première paroi pour être ainsi séparé.

La première section de trommel 3 est conçue pour recevoir en son sein le mélange de déchets 2 pour effectuer un premier tri de ce dernier. De préférence, ladite première section de trommel 3 est prévue pour mettre en contact le mélange de déchets 2 avec la première paroi de séparation 5. Au contact de cette dernière, le mélange de déchets 2 est tamisé, et/ou filtré, ladite première paroi de séparation 5 étant poreuse, de manière à autoriser le passage à travers elle-même de la première fraction de déchets 13, et d'interdire le passage à travers elle-même de la deuxième fraction résiduelle de déchets 14. De préférence, la première fraction de déchets 13 est formée par des déchets dont la taille est inférieure, en moyenne, à ceux de la deuxième fraction résiduelle de déchets 14.

Les orifices de séparation 7, 8 de la première série d'orifices de séparation 7, 8 sont ménagés au travers de la première paroi de séparation 5, de manière à la rendre poreuse, et sont calibrés pour laisser passer au travers d'eux même exclusivement la première fraction de déchets 13, dont les éléments sont plus fins que ceux de la deuxième fraction résiduelle de déchets 14, à la manière d'un tamis.

Le mélange de déchets 2 est destiné à progresser, par exemple par gravité, le long de la première paroi de séparation 5 sur toute la première longueur L1. Cette dernière représente avantageusement la longueur poreuse de la première paroi de séparation 5, c'est-à-dire la longueur utile percée par la première série d'orifices de séparation 7, 8.

La première fraction de déchets 13 est évacuée de la première section de trommel 3 à l'aide par exemple de la gravité, dans une première trémie 12 placée au dessous de la première section de trommel 3. La deuxième fraction résiduelle de déchets 14 reste avantageusement canalisée au sein de la première section de trommel 3, et est amenée à passer dans la deuxième section de trommel 4.

Dans la mesure où le mélange de déchets 2 passe en premier lieu dans la première section de trommel 3, ce dernier permet préférentiellement d'en séparer les déchets dont la taille est la plus faible, dont la masse volumique est la plus élevée, dont l'inertie dynamique est la plus importante, les déchets les plus collants, gras, salissants et humides du mélange de déchets 2. La première fraction de déchets 13 est ainsi avantageusement majoritairement formée par des déchets présentant de telles propriétés. En l'espèce, la première fraction de déchets 13 concentre ainsi majoritairement des déchets organiques et/ou biodégradables, lesquels présentent la plupart du temps les propriétés précitées.

De préférence, tel qu'illustré aux figures 4 et 5, la première série d'orifices de séparation 7, 8 comprend au moins des orifices primaires 7 permettant au moins de contribuer à séparer le mélange de déchets 2 selon la première fraction de déchets 13 et selon la deuxième fraction résiduelle de déchets 14 par passage de la première fraction de déchets 13 au travers desdits orifices primaires 7, ces derniers étant d'une taille adaptée pour interdire le passage de déchets d'une taille supérieure à 80 mm. Ne sont ainsi autorisés à passer au travers des orifices primaires 7, dans ce cas préférentiel, que les déchets suffisamment petits, pour former la première fraction de déchets 13. La taille des orifices primaires 7 ainsi choisie permet de préférence d'effectuer une sélection de bonne qualité des déchets biodégradables, c'est-à-dire qu'elle permet d'obtenir une concentration élevée en déchets biodégradables dans la première fraction de déchets 13. A cet effet, les orifices primaires 7 sont préférentiellement de section circulaire, et d'un diamètre compris entre 85 mm et 95 mm, de préférence environ 90 mm. Il convient de bien considérer que, notamment pour s'adapter à la composition du mélange de déchets 2, d'autres tailles et formes d'orifices primaires 7 pourront être envisagées sans sortir du cadre de l'invention, par exemple polygonale, oblongue, plus petite taille, ou plus grande taille.

Les orifices primaires 7 sont avantageusement répartis de façon régulière, de manière à former un maillage, sur la majorité de la surface de la première paroi de séparation 5.

De manière avantageuse, et tel qu'illustré à la figure 4, la première série d'orifices de séparation 7, 8 comprend également des orifices secondaires 8 permettant de contribuer à séparer le mélange de déchets 2 selon la première fraction de déchets 13 et selon la deuxième fraction résiduelle de déchets 14 par passage de la première fraction de déchets 13 au travers desdits orifices secondaires 8, ces derniers étant d'une taille adaptée pour autoriser le passage de déchets dont la taille est comprise entre 1 fois et 1,5 fois la taille des déchets dont le passage est autorisé par les orifices primaires 7, les orifices secondaires 8 étant disposés en amont des orifices primaires 7, en considération du sens de la circulation du mélange de déchets 2.

Contrairement aux trommels usuels, la première paroi de séparation 5 présente avantageusement une porosité décroissante le long de sa première longueur L1, de sorte que le mélange de déchets 2 est d'abord mis en contact avec les orifices secondaires 8, puis avec les orifices primaires 7, la taille des orifices secondaires 8 étant supérieure à la taille des orifices primaires 7. Les orifices secondaires 8 sont préférentiellement de section circulaire, et d'un diamètre compris entre 105 mm et 115 mm, de préférence environ 110mm. Il convient de bien considérer que, notamment pour s'adapter à la composition du mélange de déchets 2, d'autres tailles et formes d'orifices secondaire 8 pourront être envisagées sans sortir du cadre de l'invention, par exemple polygonale, oblongue, plus petite taille, ou plus grande taille.

Les orifices secondaires 8 sont préférentiellement répartis de façon régulière, de manière à former un maillage, sur une portion minoritaire de la surface de la première paroi de séparation 5 qui est inoccupée par les orifices primaires 7. Les orifices secondaires 8 sont avantageusement répartis sur environ un huitième de la première longueur L1, les orifices secondaires occupant sensiblement toute la longueur restante.

Répartis sur une longueur si courte, les orifices secondaires 8 permettent d'inclure à la première fraction de déchets 13 uniquement une portion de déchets de taille supérieure à celle autorisée par les orifices primaires 7 et contenus dans le mélange de déchets 2. De manière particulièrement avantageuse, une telle conception permet d'assurer que la deuxième fraction résiduelle de déchets 14 contienne une proportion moindre, voir sensiblement nulle, de déchets biodégradables, même si une portion plus importante de déchets non biodégradables est susceptible d'être introduite dans la première fraction de déchets 13.

De préférence, la machine de tri 1 comprend également une deuxième section de trommel 4, pourvue d'une deuxième paroi de séparation 6 s'étendant sur une deuxième longueur L2 axiale, ladite deuxième paroi de séparation 6 étant pourvue d'une deuxième série d'orifices de séparation 9 traversants permettant de séparer la deuxième fraction résiduelle de déchets 14 en une sous-fraction de petits déchets 15 franchissant ladite deuxième paroi de séparation 6 par l'intermédiaire de ladite deuxième série d'orifices de séparation 9 et en une sous-fraction de gros déchets 16 résiduelle, la sous-fraction de gros déchets 16 étant formée par des déchets dont la taille est supérieure à la sous-fraction de petits déchets 15, la deuxième fraction résiduelle de déchets 14 étant destinée à circuler le long de ladite deuxième paroi pour être ainsi séparée.

La deuxième section de trommel 4 est conçue pour recevoir en son sein la deuxième fraction résiduelle de déchets 14, provenant de la première section de trommel 3, pour effectuer un deuxième tri de ladite deuxième fraction résiduelle de déchets 14. La deuxième section de trommel 4 est préférentiellement prévue pour mettre en contact la deuxième fraction résiduelle de déchets 14 avec la deuxième paroi de séparation 6. Au contact de cette dernière, la deuxième fraction résiduelle de déchets 14 est tamisée, et/ou filtrée, ladite deuxième paroi de séparation 6 étant poreuse, de manière à autoriser le passage à travers elle-même de la sous-fraction de petits déchets 15, et d'interdire le passage à travers elle-même de la sous-fraction de gros déchets 16.

Les orifices de séparation 9 de la deuxième série d'orifices de séparation 9 sont ménagés au travers de la deuxième paroi de séparation 6, de manière à la rendre poreuse, et sont calibrés pour laisser passer au travers d'eux même exclusivement la sous-fraction de petits déchets 15, dont les éléments sont plus fins que ceux de la sous-fraction de gros déchets 16, à la manière d'un tamis.

La deuxième fraction résiduelle de déchets 14 est destiné à progresser, par exemple par gravité, le long de la deuxième paroi de séparation 6 sur toute la deuxième longueur L2. Cette dernière représente avantageusement la longueur poreuse de la deuxième paroi de séparation 6, c'est-à-dire la longueur utile percée par la deuxième série d'orifices de séparation 9.

Tel qu'illustré à la figure 4, la sous-fraction de petits déchets 15 est évacuée de la deuxième section de trommel 4 à l'aide par exemple de la gravité, dans une deuxième trémie 17 placée au dessous de la deuxième section de trommel 4. La sous-fraction de gros déchets 16 reste préférentiellement canalisée au sein de la deuxième section de trommel 4 et évacuée de ce dernier. De préférence, la deuxième section de trommel 4 présente pour cela une sortie de refus par l'intermédiaire de laquelle la sous-fraction de gros déchets 16 est destinée à sortir de ladite deuxième section de trommel 4. La sortie de refus 21 débouche avantageusement vers une trémie d'évacuation 18 connectée à l'extrémité de la deuxième section de trommel 4, et dans laquelle la sous-fraction de gros déchets 16 tombe par gravité.

Dans la mesure où la deuxième fraction résiduelle de déchets 14 est préférentiellement sensiblement dénuée de déchets biodégradables, salissants, collants et/ou de masse volumique élevée, lesquels ont été écartés par la première section de trommel 3, la deuxième section de trommel 4 permet préférentiellement d'effectuer un tri des déchets, incluant notamment des déchets recyclables, présents dans la deuxième fraction résiduelle de déchets 14. Elle permet en particulier, de façon préférentielle, d'isoler des déchets de taille relativement importante contenus dans la sous-section de gros déchets 16, qui pourront par exemple faire l'objet d'un tri manuel biodégradables, les déchets recyclables et les déchets non recyclables. Les déchets plus petits avantageusement contenus dans la sous-section de petits déchets 15 pourront quant à eux faire par exemple l'objet d'un tri automatisé visant à séparer les déchets biodégradables, les déchets recyclables et les déchets non recyclables. En tout état de cause, les tris ultérieurs effectués sur la sous-section de petits déchets 15 et sur la sous-section de gros déchets 16 sont avantageusement facilités, dans la mesure où les déchets sont, à ce stade, sensiblement nettoyés des déchets organiques et/ou biodégradables, collants, salissants et nauséabonds.

De préférence, la deuxième série d'orifices de séparation 9 comprend au moins des orifices tertiaires 9 permettant au moins de contribuer à séparer la deuxième fraction résiduelle de déchets 14 selon la sous-fraction de petits déchets 15 et selon la sous-fraction de gros déchets 16 par passage de la sous-fraction de petits déchets 15 au travers desdits orifices tertiaires 9, ces derniers étant d'une taille adaptée pour interdire le passage de déchets d'une taille supérieure à au moins 200 mm, voire 300 mm. Ne sont ainsi autorisés à passer au travers des orifices tertiaires 9, dans ce cas préférentiel, que les déchets suffisamment petits, pour former la sous-fraction de petits déchets 15. La taille des orifices tertiaire 9 ainsi choisie permet de préférence d'effectuer une sélection d'un type prédéterminé de déchets recyclables, c'est-à-dire qu'elle permet d'obtenir une concentration élevée de ce type particulier de déchets recyclables la sous-fraction de petits déchets 15. Pour ce faire, les orifices tertiaires 9 sont avantageusement de section oblongue, et ladite section oblongue présentant un petit diamètre Dp, et un grand diamètre Dg, tel qu'illustré en particulier à la figure 6. L'expression « *section oblongue* » inclut de préférence une forme de section par exemple rectangulaire ou elliptique, ou une forme combinant les caractéristiques de ces dernières. De manière avantageuse, on choisit le grand diamètre Dg et le petit diamètre Dp pour qu'ils correspondent à des types de déchets que l'on souhaite inclure en particulier dans la sous-fraction de petits déchets 15. Par exemple, le mélange de déchets 2 étant susceptible de contenir des bouteilles en plastique ou en verre, dont la taille standard est généralement d'une trentaine de centimètres, on pourra choisir un grand diamètre Dg d'une taille légèrement supérieure à la taille desdites bouteilles, c'est-à-dire légèrement supérieure à une trentaine de centimètres. De même, par exemple, le mélange de déchets 2 étant susceptible de contenir des journaux usagés, dont la taille standard est généralement d'une vingtaine de centimètres, on pourra choisir un petit diamètre Dp d'une taille légèrement supérieure à la taille desdits journaux, c'est-à-dire légèrement supérieure à une vingtaine de centimètres.

Par conséquent, de préférence, pour chaque orifice tertiaire, le petit diamètre Dp est compris entre 200 et 240 mm, de préférence environ 220 mm, le grand diamètre Dg étant compris entre 300 et 400 mm, de préférence environ 330 mm, le petit diamètre Dp étant sensiblement perpendiculaire au grand diamètre Dg, tel qu'illustré en particulier à la figure 6. Bien entendu, notamment pour s'adapter à la composition du mélange de déchets 2 initial, d'autres tailles et formes d'orifices tertiaires 9 pourront être envisagées sans sortir du cadre de l'invention, par exemple polygonale, circulaire, plus petite taille, ou plus grande taille.

De manière avantageuse, tel qu'illustré à la figure 6, les orifices tertiaires 9 sont répartis en rangées successives le long de la deuxième longueur L2, en alternant au moins :
- une rangée longitudinale 19 d'orifices tertiaires 9, dans laquelle le grand diamètre Dg des orifices tertiaires 9 de la rangée droite est aligné dans le sens de la deuxième longueur L2, et
- une rangée transversale 20 d'orifices tertiaires 9, dans laquelle le petit diamètre Dp des orifices tertiaires 9 de la rangée transversale 20 est aligné dans le sens de la deuxième longueur L2.

De préférence, le grand diamètre Dg des orifices tertiaires 9 est parallèle à un deuxième axe longitudinal Y-Y' du deuxième trommel 4, tel que décrit plus bas. De préférence au contraire, le grand diamètre Dg des orifices tertiaires 9 est perpendiculaire au deuxième axe longitudinal Y-Y'.

D'une rangée à l'autre, les orifices tertiaires 9 sont ainsi préférentiellement sensiblement perpendiculaires les uns aux autres, de manière à anticiper l'orientation des déchets à inclure dans la sous-fraction de petits déchets 15, et d'améliorer l'efficacité du tri de la deuxième section de trommel 4.

De préférence, la deuxième série d'orifices de séparation 9 sera formée d'une alternance de rangées longitudinales 19 et de rangées transversales 20 d'orifices tertiaires 9.

Bien entendu, d'autres dispositions des orifices tertiaires pourront être envisagées sans sortir du cadre de l'invention.

Avantageusement, la première série d'orifices de séparation 7, 8 est répartie sensiblement sur toute la première longueur L1 de la première section de trommel 3, la deuxième série d'orifices de séparation 9 est répartie sensiblement sur toute la deuxième longueur L2 de la deuxième section de trommel 4, de manière à être répartis sur au moins la majorité de, voire sur toute, la surface formée par la première paroi de séparation 5 et par la deuxième paroi de séparation 6. Une telle conception permet d'augmenter la proportion utile de desdites parois de séparation, et ainsi d'améliorer la compacité de la machine de tri 1 de manière générale.

Selon une caractéristique préférentielle, la deuxième longueur L2 est inférieure à la première longueur L1. Ainsi, la première section de trommel 3, et en particulier la première paroi de séparation 5 est d'une longueur supérieure à celle de la deuxième section de trommel 4, et en particulier la deuxième paroi de séparation 6. Une telle conception permet à la première section de trommel 3 d'assurer efficacement la séparation d'une majorité, voire de tous les déchets biodégradables initialement contenus dans le mélange de déchets 2. En effet, la première longueur L1 est avantageusement choisie pour être suffisamment longue afin que tous les déchets du mélange de déchets 2 susceptibles de traverser la première paroi de séparation 5 soient effectivement inclus dans la première faction de déchets 13.

De façon préférentielle, la première longueur L1 vaut au moins 1,05 fois la deuxième longueur L2, de préférence au moins 1,10 fois, de manière encore plus préférentielle au moins 1,12 fois. La somme de la première longueur L1 et de la deuxième longueur L2 vaut avantageusement entre 10 et 20 m. La machine de tri 1 est préférentiellement conçue pour trier entre 10 et 50 T/h de mélange de déchets (2).

De façon préférentielle, tel que représenté par exemple à la figure 6, la première paroi de séparation 5 présente une forme générale de prisme, de cylindre ou de tronc de cône, dont la hauteur forme un premier axe longitudinal X-X' de la première paroi de séparation 5, cette dernière étant mise en rotation autour du premier axe longitudinal X-X'.

De manière avantageuse, la deuxième paroi de séparation 6 présente une forme générale de prisme, de cylindre ou de tronc de cône, dont la hauteur forme un deuxième axe longitudinal Y-Y' de la deuxième paroi de séparation 6, cette dernière étant mise en rotation autour du deuxième axe longitudinal Y-Y'.

Le premier axe longitudinal X-X' et/ou le deuxième axe longitudinal Y-Y' sont préférentiellement légèrement inclinés par rapport à l'horizontale, de manière à permettre, par gravité, une progression des déchets dans les sections de trommel selon un sens de circulation prédéterminé, avantageusement de l'entrée d'admission 10, vers la deuxième section de trommel 4, jusqu'à la trémie d'évacuation 18 en sortie de refus de la deuxième section de trommel 4.

La mise en rotation de la première section de trommel 3 et/ou de la deuxième section de trommel 4 permet aux déchets d'être brassés et retournés, afin qu'au moins une majorité d'entre eux, sinon tous, aient la possibilité d'entrer en contact avec la première paroi de séparation 5 et/ou la deuxième paroi de séparation 6 pour être triés.

Pour permettre un meilleur brassage des déchets et améliorer l'efficacité du tri de la machine de tri 1, la première section de trommel 3 et/ou la deuxième section de trommel 4 sont conçues chacune pour être mises en rotation, la rotation s'effectuant de préférence alternativement dans un sens et dans l'autre selon une fréquence souhaitée, autour de leurs axes longitudinaux respectifs.

On peut avantageusement choisir une forme cylindrique, qui permet aux déchets, lors de la rotation des sections de trommel, de se frotter les uns aux autres de manière à se nettoyer mutuellement des déchets collants. Alternativement on pourra par exemple choisir une forme prismatique de base octogonale pour entraîner un rebond des déchets sur les parois, afin de permettre une meilleure séparation des déchets les uns des autres.

Le diamètre de la première section de trommel 3 et de la deuxième section de trommel 4 est avantageusement compris entre 2 et 3 m.

Par conséquent, tel qu'illustré à la figure 4, la première série d'orifices de séparation 7, 8 est répartie de préférence sur toute la circonférence de la première paroi de séparation 5, la deuxième série d'orifices de séparation 9 étant répartie sur toute la circonférence de la deuxième paroi de séparation 6.

De préférence, et tel qu'illustrés aux figures, les orifices de séparation 7, 8 de la première série d'orifices de séparation 7, 8 sont répartis sur la première paroi de séparation 5 selon un premier maillage en quinconce, les orifices de séparation 9 de la deuxième série d'orifices de séparation 9 étant répartis sur la deuxième paroi de séparation 6 selon un deuxième maillage en quinconce. De cette manière, les orifices de séparation 7, 8, 9 sont disposés à la fois en une première hélice et une deuxième hélice croisée, ce qui améliore l'efficacité du tri lors de la circulation des déchets dans la première section de trommel 3 et dans la deuxième section de trommel 4, quel que soit le sens de rotation desdits sections de trommel 3, 4.

De façon préférentielle, la première paroi de séparation 5 et/ou la deuxième paroi de séparation 6 est pourvue d'ailettes de relevage 22 des déchets circulant dans la première section de trommel 3 et/ou dans la deuxième section de trommel 4, respectivement. Les ailettes de relevage 22 sont de préférence disposées chacune dans le sens longitudinal des sections de trommel 3, 4, de manière à entraîner, à relever et à remuer les déchets lors de la rotation desdites sections de trommel 3, 4. Les ailettes de relevage 22 sont avantageusement disposées en quinconce.

Tel qu'illustré à la figure 4, la première section de trommel 3 et la deuxième section de trommel 4 forment un unique trommel 3, 4 rotatif de façon monobloc autour d'un unique axe longitudinal X-X'-Y-Y', l'extrémité de sortie de la première section de trommel 3 étant directement connectée à l'extrémité d'entrée de la deuxième section de trommel 4. Dans ce cas préférentiel, les sections de trommel 3, 4 sont solidaires, et forment un tambour unique.

Dans ce cas préférentiel représenté à la figure 4, la machine de tri 1 comprend trois reprises d'effort 23 permettant de soutenir et/ou d'entraîner en rotation l'unique trommel, deux des reprises d'effort 23 étant placées aux extrémités de l'unique trommel, la dernière étant placée de façon sensiblement médiane aux deux autres. Le reprises d'effort 23 correspondent par exemple à des roulements, et/ou à des moyens d'entraînement du genre roue dentée d'engrenage ou poulie d'entraînement. La reprise d'effort médiane 23 permet avantageusement d'éviter tout risque de flexion de l'unique trommel 3, 4, notamment dans le cas où sa longueur totale est importante et où la quantité de déchets en son sein est particulièrement massive.

Alternativement, selon une autre variante préférentielle non représentée aux figures 3 à 6, il est possible d'envisager que la première section de trommel 3 et la deuxième section de trommel 4 forment deux trommels indépendants, la machine de tri 1 incluant des moyens de transfert de la deuxième fraction résiduelle de déchets 14 depuis la première section de trommel 3 jusqu'à la deuxième section de trommel 4.

La première section de trommel 3 comprend de préférence une sortie de transfert de la deuxième fraction résiduelle de déchets 14, la deuxième section de trommel 4 comprenant une entrée secondaire de la deuxième fraction résiduelle de déchets 14. L'entrée secondaire est avantageusement connectée à la sortie de transfert, pour que les déchets puissent circuler depuis la première section de trommel 3 jusqu'à la deuxième section de trommel 4. Préférentiellement, la machine de tri 1 est conçue pour que la deuxième fraction résiduelle de déchet 14 tombe par gravité depuis la première section de trommel 3 dans la deuxième section de trommel 4.

A titre purement illustratif, la variante représentée aux figures 3 à 6 peut fonctionner de la manière décrite ci-après.

L'unique trommel 3, 4 étant en rotation de façon alternative dans un sens et dans l'autre autour de son axe longitudinal, on introduit par l'entrée d'admission 10 le mélange de déchets 2 à trier.

Le mélange de déchets 2 circule tout d'abord dans la première section de trommel 3 de manière à être séparé :
- d'une part en une première fraction de déchets 13, qui passe au travers de la première paroi de séparation 5 pour tomber dans la première trémie 12, et
- d'autre part une deuxième fraction résiduelle de déchets 14 qui reste à l'intérieur de l'unique trommel 3, 4 et progresse en direction de la deuxième section de trommel 4.

En atteignant la deuxième section de trommel 4, la deuxième fraction résiduelle de déchets 14 est à nouveau triée, et en l'espèce séparée :
- d'une part en une sous-fraction de petits déchets 15, qui passe au travers de la deuxième paroi de séparation 6 pour tomber dans la deuxième trémie 17, et
- d'autre part en une sous-fraction de gros déchets 16, qui est évacuée de la deuxième section de trommel 4 par la sortie de refus 21, de manière à tomber dans la trémie d'évacuation 18.

Les fractions et sous-fractions de déchets 13, 15, 18 récupérées de façon séparée dans les trémies 12, 17, 18 peuvent ainsi être traitées de façon séparée, en dépit de la très grande hétérogénéité du mélange de déchets 2 initial.

Selon l'invention, l'installation de traitement comprend également une installation de compostage permettant de faire subir un processus de compostage à la première fraction de déchets 13 de manière à composter au moins en partie les déchets biodégradables qu'elle contient.

Tel qu'illustré aux figures 7 à 9, l'installation de compostage comprend de préférence :
- au moins une première baie de compostage 3C permettant de faire subir un premier cycle de compostage à la première fraction de déchets 13de manière à composter au moins en partie les déchets biodégradables de ladite première fraction de déchets 13, et à obtenir un mélange de déchets 2 pré-compostés,
- au moins une baie de séchage 2C du mélange de déchets 2 pré-compostés, permettant d'obtenir un mélange de déchets 2 séchés,
- des moyens de séparation du mélange de déchets 2 séchés au moins en une portion de déchets lourds 25 et une portion de déchets légers 13C, la portion de déchets lourds 25 étant sensiblement formée par des déchets de masse volumique plus élevée que les déchets de la portion de déchets légers 13C,
- au moins une deuxième baie de compostage 3C permettant de faire subir un deuxième cycle de compostage à la portion de déchets légers 13C de manière à composter au moins en partie les déchets biodégradables qu'elle contient, et à obtenir un mélange de déchets affinés 28.

L'installation de compostage permet avantageusement de mettre en œuvre l'étape E2 décrite ci-avant. Dès lors, les éléments de cette installation de compostage, et notamment la première baie de compostage 3C, la deuxième baie de compostage 3C, la baie de séchage 2C, les moyens de séparation, correspondent avantageusement à ceux décrits ci-avant.

De préférence, la première baie, et/ou la deuxième baie, comprennent des sources d'humidité 6C permettant d'humidifier le mélange de déchets 2 concerné, c'est-à-dire respectivement la première fraction de déchets 13 et la portion de déchets légers 13C.

De façon avantageuse, la baie de séchage 2C comprend un récupérateur 10C d'une portion de l'humidité 6C contenue dans le mélange de déchets 2 pré-compostés lors du séchage de ce dernier, le récupérateur 10C permettant d'alimenter les sources d'humidité 6C avec l'humidité 6C récupérée lors du séchage desdits déchets pré-compostés.

Le récupérateur 10C correspond avantageusement à celui décrit ci-avant, et comprend par exemple un dispositif de condensation de l'humidité 6C contenue dans l'air de séchage, qui a été extraite du mélange de déchets 2 pré-compostés. Le récupérateur 10C comprend par exemple également un dispositif de drainage des jus de compostage 11C, disposé au niveau du sol 12D, permettant de capter et drainer lesdits jus de compostage 11C.

De préférence, la baie de séchage 2C comprend des moyens de mise en circulation d'air séchant A_{sech} au travers du mélange de déchets 2 pré-composté pour sécher ce dernier, les moyens de mise en circulation incluant au moins :
- des moyens de soufflage d'air 7C au dessus du mélange de déchets 2 pré-compostés,
- des moyens d'aspiration d'air 8C séchant en dessous du mélange de déchets 2 pré-compostés, disposés par exemple au niveau du sol 12D, sous le tas de déchets pré-compostés.

Une telle disposition permet avantageusement de créer une circulation d'air séchant A_{sech} de haut en bas propre à permettre d'effectuer un séchage du mélange de déchets 2 pré-compostés.

Le dispositif de condensation est préférentiellement placé au sein des moyens d'aspiration 8C et/ou des moyens de soufflage 7C.

La baie de séchage 2C comprend préférentiellement une source de lumière 5C telle que décrite ci-avant, permettant d'irradier le mélange de déchets 2 en cours de séchage, et ainsi faciliter son séchage.

La baie de compostage 3C comprend avantageusement également une source de lumière 5C permettant d'irradier le mélange de déchets 2 en cours de compostage, et ainsi d'améliorer le compostage de ce dernier (tel qu'illustré à la figure 9), la lumière naturelle, et en particulier les rayons solaires étant propices au développement de la vie, et en particulier aux micro-organismes qui y sont sensibles.

La source de lumière 5C peut avantageusement être formée par une verrière placée à l'aplomb de la baie de compostage 3C ou de séchage 2C, laissant passer la lumière du soleil et protégeant la baie des intempéries.

Une telle disposition permet avantageusement d'éviter le colmatage des moyens de mise en circulation.

L'installation de compostage comprend en outre avantageusement des moyens de traitement de l'air séchant A_{sech} ayant circulé au travers du mélange de déchets 2 pré-compostés pour le décharger sensiblement de toute émission de compostage, notamment odorante, tels que décrits par exemple ci-avant.

De préférence, les baies de compostage et les baies de séchage sont identiques, et/ou sont confondues, pour former des baies de compostage/séchage et assurer sélectivement les deux fonctions associées. Bien entendu, les baies de séchage et les baies de compostage pourront être parfaitement distinctes sans sortir du cadre de l'invention.

Tel que décrit ci-avant, les moyens de séparation incluent préférentiellement au moins un séparateur à tapis balistique 12C et un séparateur à table densimétrique associés permettant de séparer la portion de déchets lourds 25 et la portion de déchets légers 13C.

L'installation comporte avantageusement des moyens d'ajout (non représentés), à la deuxième fraction résiduelle de déchets 14, de la portion de déchets lourds 25 séparés les moyens de séparation de l'installation de compostage. Les moyens d'ajout peuvent se présenter par exemple comme un convoyeur conçu pour transporter la portion de déchets lourds 25 pour l'ajouter à la deuxième fraction résiduelle de déchets 14. La portion de déchets lourds 25 récupérée de la première fraction de déchets 13 peut ainsi avantageusement être ajoutée à la deuxième fraction résiduelle de déchets 14 à l'issue de l'étape E1.

De préférence, l'installation de traitement comprend au moins une ligne de tri automatique de déchets d'une sous-fraction de petits déchets 15 de la deuxième fraction résiduelle de déchets 14 (associée de préférence à l'étape E6), et au moins une ligne de tri manuel d'une sous-fraction de gros déchets de la deuxième fraction résiduelle de déchets 14 (associée de préférence à l'étape E5), la sous-fraction de gros déchets étant formée par des déchets dont la taille est supérieure à la sous-fraction de petits déchets (15), les lignes de tri permettant de séparer des déchets recyclables (26) de la deuxième fraction résiduelle de déchets (14), ainsi que des déchets non recyclables.

Tel que décrit ci-avant, la ligne de tri automatique comprend de préférence un séparateur à tapis balistique, un tapis accélérateur, un moyen de récupération bas, un moyen de récupération haut, un piège à verre, un racleur de bande en tungstène, des robots de tri de déchets sensiblement plats, des robots de tri de déchets sensiblement volumiques, des jeux de convoyeurs à bandes.

Grâce à une telle installation, tout ou partie du procédé décrit ci-avant peut être effectué de préférence de manière automatisée et industrielle.

Enfin, l'installation de traitement comprend préférentiellement une installation de fabrication de combustible solide de récupération à partir des déchets non recyclables séparés à l'aide des lignes de tri, permettant d'effectuer en particulier l'étape X décrite ci-avant.

De préférence, grâce à une telle invention, il est possible de recycler et de valoriser au moins 80 % de la masse du mélange de déchets initial, de préférence au moins 90 %.

### POSSIBILITE D'APPLICATION INDUSTRIELLE

L'invention trouve son application industrielle dans la conception, la réalisation et la mise en œuvre de moyens de traitement d'un mélange de déchets de tailles, de formes et de consistances hétéroclites, mélange comprenant des déchets biodégradables et des déchets recyclables non biodégradables.

## Revendications

1. - Procédé de traitement d'un mélange de déchets (2) formé par des déchets ménagers et/ou par des déchets d'activités économiques qui n'ont subi aucun tri préalable visant à effectuer une séparation de déchets biodégradables et de déchets recyclables non biodégradables, lesdits déchets étant de tailles, de formes et de consistances hétéroclites, une portion non négligeable de la masse du mélange de déchets (2) étant formée par des déchets biodégradables, par exemple au moins 10 % de la masse, et au moins 20 % de la masse du mélange étant formée par des déchets recyclables (26) non biodégradables, le procédé de traitement comportant les étapes successives suivantes :
- Étape E1 au cours de laquelle on sépare le mélange de déchets (2) en une première fraction de déchets (13) dont la taille est inférieure à environ 180 mm, de préférence inférieure à 140 mm par l'intermédiaire d'une première série d'orifices de séparation (7,8) et en une deuxième fraction résiduelle de déchets (14), ladite première série d'orifices de séparation (7,8) comprenant des orifices primaires (7) et des orifices secondaires (8) dont la taille est supérieure à la taille des orifices primaires (7) de sorte que le mélange de déchets (2) est d'abord mis en contact avec les orifices secondaires puis avec les orifices primaires (7),
- Étape E2 au cours de laquelle on fait subir un processus de compostage à la première fraction de déchets (13) de manière à composter au moins en partie les déchets biodégradables qu'elle contient.

2. - Procédé de traitement selon la revendication 1, **caractérisé en ce que** les orifices secondaires (8) ont une taille adaptée pour autoriser le passage de déchets dont la taille est comprise entre 1 fois et 1,5 fois la taille des déchets dont le passage est autorisé par les orifices primaires (7).

3. - Procédé de traitement selon l'une des revendications précédentes, **caractérisé en ce que** les déchets de la première fraction de déchets (13) ont une taille inférieure à environ 110 mm.

4. - Procédé de traitement selon la revendication précédente, **caractérisé en ce que** au moins 10%, de préférence au moins 20%, de la masse du mélange est formée par des déchets biodégradables.

5. - Procédé de traitement selon l'une quelconque des revendications précédentes, **caractérisé en ce que** lesdits déchets n'ont subi aucun broyage préalable.

6. - Procédé de traitement selon l'une quelconque des revendications précédentes, **caractérisé en ce qu'**il comporte :
- une étape W au cours de laquelle on effectue un recyclage de déchets recyclables (26) non biodégradables que l'on a préalablement séparés de la première fraction de déchets (13) au cours de l'étape E2 et de déchets recyclables (26) que l'on a préalablement séparés de la deuxième fraction résiduelle de déchets (14), et
- une étape X au cours de laquelle on fait subir un processus de fabrication de combustible solide de récupération à des déchets, préférentiellement non recyclables (27), que l'on a séparés de la première fraction de déchets (13) au cours de l'étape E2 et que l'on a séparés de la deuxième fraction résiduelle de déchets (14).

7. - Procédé de traitement selon l'une quelconque des revendications précédentes, **caractérisé en ce qu'**il comporte, à l'issue de l'étape E1 ou simultanément à cette dernière, une étape E4 de séparation de la deuxième fraction résiduelle de déchets (14) en une sous-fraction de gros déchets et une sous-fraction de petits déchets (15), la sous-fraction de gros déchets étant formée par des déchets dont la taille est supérieure à la sous-fraction de petits déchets (15).

8. - Procédé de traitement selon la revendication précédente, **caractérisé en ce que** la sous-fraction de gros déchets est formée par des déchets dont la taille est supérieure à environ 330 mm, la sous-fraction de petits déchets (15) étant formée par des déchets dont la taille est inférieure à environ 330 mm.

9. - Procédé de traitement selon l'une quelconque des revendications 7 ou 8, **caractérisé en ce qu'**il comporte une étape E5 de tri manuel de la sous-fraction de gros déchets, permettant de séparer d'une part les déchets recyclables (26) qu'elle contient, et d'autre part les déchets non recyclables (27) qu'elle contient.

10. - Procédé de traitement selon l'une quelconque des revendications 7 à 9, **caractérisé en ce qu'**il comporte une étape E6 de tri automatisé de la sous-fraction de petits déchets (15), permettant de séparer d'une part les déchets recyclables (26) qu'elle contient, et d'autre part les déchets non recyclables (27) qu'elle contient.

11. - Procédé de traitement selon l'une quelconque des revendications précédentes, **caractérisé en ce que**, préalablement à l'étape E1, le procédé comprend une étape E7 d'ouverture de sacs (24), du genre sacs poubelles plastique, dans lesquels sacs (24) est contenu le mélange de déchets (2), afin de libérer ledit mélange de déchets (2) desdits sacs (24) pour effectuer l'étape E1.

## Patentansprüche

1. Verfahren zur Behandlung eines Abfallgemisches (2), das aus Haushaltsabfällen und/oder gewerblichen Abfällen gebildet wird, die keiner vorherigen Sortierung unterzogen wurden, wobei es das Ziel ist, eine Trennung von biologisch abbaubaren Abfällen und recycelbaren, nicht biologisch abbaubaren Abfällen durchzuführen, wobei die Abfälle von heterogener Größe, Form und Konsistenz sind, wobei ein nicht vernachlässigbarer Anteil der Masse des Abfallgemisches (2) aus biologisch abbaubaren Abfällen gebildet wird, beispielsweise wenigstens 10 % der Masse, und wenigstens 20 % der Masse des Gemisches aus recycelbaren, nicht biologisch abbaubaren Abfällen (26) gebildet werden, wobei das Behandlungsverfahren die folgenden aufeinanderfolgenden Schritte umfasst:
- Schritt E1, bei dem das Abfallgemisch (2) durch eine erste Reihe von Trennöffnungen (7, 8) in eine erste Abfallfraktion (13) mit einer Größe von weniger als etwa 180 mm, vorzugsweise weniger als 140 mm, und in eine restliche zweite Abfallfraktion (14) getrennt wird, wobei die erste Reihe von Trennöffnungen (7, 8) primäre Öffnungen (7) und sekundäre Öffnungen (8) umfasst, deren Größe größer ist als die Größe der primären Öffnungen (7), sodass das Abfallgemisch (2) zuerst mit den sekundären Öffnungen und anschließend mit den primären Öffnungen (7) in Kontakt gelangt,
- Schritt E2, bei dem die erste Abfallfraktion (13) einem Kompostierungsprozess unterzogen wird, um die biologisch abbaubaren Abfälle, die sie enthält, wenigstens zum Teil zu kompostieren.

2. Behandlungsverfahren nach Anspruch 1, **dadurch gekennzeichnet, dass** die sekundären Öffnungen (8) eine Größe aufweisen, die geeignet ist, den Durchgang von Abfällen zuzulassen, deren Größe zwischen dem 1-fachen und dem 1,5-fachen der Größe der Abfälle liegt, deren Durchgang durch die primären Öffnungen (7) zugelassen wird.

3. Behandlungsverfahren nach einem der vorhergehenden Ansprüche, **dadurch gekennzeichnet, dass** die Abfälle der ersten Abfallfraktion (13) eine Größe von unter etwa 110 mm aufweisen.

4. Behandlungsverfahren nach dem vorhergehenden Anspruch, **dadurch gekennzeichnet, dass** wenigstens 10 %, vorzugsweise wenigstens 20 % der Masse des Gemisches aus biologisch abbaubaren Abfällen gebildet werden.

5. Behandlungsverfahren nach einem der vorhergehenden Ansprüche, **dadurch gekennzeichnet, dass** die Abfälle keiner vorherigen Zerkleinerung unterzogen wurden.

6. Behandlungsverfahren nach einem der vorhergehenden Ansprüche, **dadurch gekennzeichnet, dass** es umfasst:
- einen Schritt W, bei dem ein Recycling der recycelbaren, nicht biologisch abbaubaren Abfälle (26), die beim Schritt E2 vorher von der ersten Abfallfraktion (13) getrennt wurden, und der recycelbaren Abfälle (26), die vorher von der restlichen zweiten Abfallfraktion (14) getrennt wurden, durchgeführt wird, und
- einen Schritt X, bei dem vorzugsweise nicht recycelbare Abfälle (27), die im Schritt E2 von der ersten Abfallfraktion (13) getrennt wurden und die von der restlichen zweiten Abfallfraktion (14) getrennt wurden, zur Wiederverwertung einem Prozess der Herstellung von festen Brennstoffen unterzogen werden.

7. Behandlungsverfahren nach einem der vorhergehenden Ansprüche, **dadurch gekennzeichnet, dass** es nach dem Schritt E1 oder gleichzeitig mit diesem einen Schritt E4 zur Trennung der restlichen zweiten Abfallfraktion (14) in eine Unterfraktion grober Abfälle und eine Unterfraktion kleiner Abfälle (15) umfasst, wobei die Unterfraktion grober Abfälle aus Abfällen gebildet wird, deren Größe größer ist als jene der Unterfraktion kleiner Abfälle (15).

8. Behandlungsverfahren nach dem vorhergehenden Anspruch, **dadurch gekennzeichnet, dass** die Unterfraktion grober Abfälle aus Abfällen mit einer Größe von mehr als etwa 330 mm gebildet wird und die Unterfraktion kleiner Abfälle (15) aus Abfällen mit einer Größe von weniger als etwa 330 mm gebildet wird.

9. Behandlungsverfahren nach einem der Ansprüche 7 oder 8, **dadurch gekennzeichnet, dass** es einen Schritt E5 der manuellen Sortierung der Unterfraktion grober Abfälle umfasst, der es ermöglicht, einerseits die in ihr enthaltenen recycelbaren Abfälle (26) und andererseits die in ihr enthaltenen nicht recycelbaren Abfälle (27) zu trennen.

10. Behandlungsverfahren nach einem der Ansprüche 7 bis 9, **dadurch gekennzeichnet, dass** es einen Schritt E6 der automatisierten Sortierung der Unterfraktion kleiner Abfälle (15) umfasst, der es ermöglicht, einerseits die in ihr enthaltenen recycelbaren Abfälle (26) und andererseits die in ihr enthaltenen nicht recycelbaren Abfälle (27) zu trennen.

11. Behandlungsverfahren nach einem der vorhergehenden Ansprüche, **dadurch gekennzeichnet, dass** das Verfahren vor dem Schritt E1 einen Schritt E7 des Öffnens von Säcken (24) des Typs Müllsäcke aus Kunststoff umfasst, wobei in diesen Säcken (24) das Abfallgemisch (2) enthalten ist, um das Abfallgemisch (2) aus den Säcken (24) freizugeben, um den Schritt E1 auszuführen.

## Claims

1. A method for treating a mixture of wastes (2) formed by domestic wastes, and/or by wastes of economic activities which have not undergone any prior sorting aiming to perform a separation of biodegradable wastes and of non-biodegradable recyclable wastes, said wastes being with heterogeneous sizes, shapes and consistencies, a non-negligible portion of the mass of the mixture of wastes (2) being formed by biodegradable wastes, for example at least 10 % of the mass, and at least 20 %, of the mass of the mixture being formed by non-biodegradable recyclable wastes (26), the treatment method including the following successive steps:
- Step E1 during which the mixture of wastes (2) is separated into a first fraction of wastes (13) the size of which is smaller than about 180 mm, preferably smaller than 140 mm, via a first series of separation orifices (7, 8) and into a residual second fraction of wastes (14), said first series of separation orifices (7, 8) comprising primary orifices (7) and secondary orifices (8) the size of which is larger than the size of the primary orifices (7) so that the mixture of wastes (2) is first brought into contact with the secondary orifices and then with the primary orifices (7),
- Step E2 during which the first fraction of wastes (13) is subjected to a composting process so as to compost, at least partially, the contained biodegradable wastes.

2. The treatment method according to claim 1, **characterized in that** the secondary orifices (8) have a size adapted to enable the passage of wastes the size of which is comprised between 1 times and 1.5 times the size of the wastes the passage of which is enabled by the primary orifices (7).

3. The treatment method according to any of the preceding claims, **characterized in that** the wastes of the first fraction of wastes (13) have a size smaller than about 110 mm.

4. The treatment method according to the preceding claim, **characterized in that** at least 10 %, preferably at least 20 %, of the mass of the mixture is formed by biodegradable wastes.

5. The treatment method according to any one of the preceding claims, **characterized in that** said wastes have not undergone any prior grinding.

6. The treatment method according to any one of the preceding claims, **characterized in that** it includes:
- a step W during which is performed a recycling of the non-biodegradable recyclable wastes (26) which have been separated beforehand from the first fraction of wastes (13) during step E2 and the recyclable wastes (26) which have been separated beforehand from the residual second fraction of wastes (14), and
- a step X during which a refuse-derived fuel production process is subjected to the wastes, preferably non-recyclable (27), which have been separated from the first fraction of wastes (13) during step E2 and which have been separated from the residual second fraction of wastes (14).

7. The treatment method according to any one of the preceding claims, **characterized in that** it includes, upon completion of step E1 and simultaneously with the latter, a step E4 of separating the residual second fraction of wastes (14) into a subfraction of large-sized wastes and a subfraction of small-sized wastes (15), the subfraction of large-sized wastes being formed by wastes the size of which is larger than the subfraction of small-sized wastes (15).

8. The treatment method according to the preceding claim, **characterized in that** the subfraction of large-sized wastes is formed by wastes the size of which is larger than about 330 mm, the subfraction of small-sized wastes (15) being formed by wastes the size of which is smaller than about 330 mm.

9. The treatment method according to any one of claims 7 or 8, **characterized in that** it includes a step E5 of manual sorting of the subfraction of large-sized wastes, allowing separating, on the one hand, the contained recyclable wastes (26) and, on the other hand, the contained non-recyclable wastes (27).

10. The treatment method according to any one of claims 7 to 9, **characterized in that** it includes a step E6 of automated sorting of the subfraction of small-sized wastes (15), allowing separating, on the one hand, the contained recyclable wastes (26) and, on the other hand, the contained non-recyclable wastes (27).

11. The treatment method according to any one of the preceding claims, **characterized in that**, prior to step E1, the method comprises a step E7 of opening bags (24), such as plastic trash bags, in which bags (24) the mixture of wastes (2) is contained, in order to release said mixture of wastes (2) from said bags (24) so as to perform step E1.
